# EUROPÄISCHE PATENTSCHRIFT

(11) **EP 2 777 849 B1**
(45) Veröffentlichungstag und Bekanntmachung des Hinweises auf die Patenterteilung: **01.06.2016**
(21) Anmeldenummer: 14160060.1
(22) Anmeldetag: 14.03.2014
(51) Int. Cl.: B23B 31/177

(54) **Spann- oder Greifeinrichtung**
Clamping or gripping device
Dispositif de serrage ou de préhension

(30) Priorität: 14.03.2013 DE 202013002446 U
(43) Veröffentlichungstag der Anmeldung: 17.09.2014
(73) Patentinhaber: Schunk GmbH & Co. KG Spann- und Greiftechnik, 74348 Lauffen am Neckar (DE)
(72) Erfinder: Übele, André, D-71546 Aspach (DE)
(74) Vertreter: Albrecht, Ralf

(56) Entgegenhaltungen:
- EP-A1- 1 184 112
- EP-A2- 1 886 751
- DE-C- 408 900
- DE-U1- 8 526 400
- GB-A- 1 381 146
- GB-A- 2 178 984

## Beschreibung

Die vorliegende Erfindung betrifft eine Spann- oder Greifeinrichtung gemäß dem Oberbegriff des Anspruchs 1.

Spann- oder Greifeinrichtung dieser Art sind aus dem Dokument EP 1 886 751 A bekannt und werden insbesondere als Präzisions-Spannfutter zum Schleifen von Werkzeugen eingesetzt. Von der Anmelderin werden derartige Präzisions-Spannfutter unter der Marke Prismo vertrieben. Diese Spannfutter umfassen einen Grundkörper aus einem formsteifen Material, der eine zur vorderen Stirnfläche des Grundkörpers offene, zentrale Aufnahme aufweist, die eine Längsachse des Spannfutters definiert. In der zentralen Aufnahme sind mehrere, bei den Prismo-Spanneinrichtungen der Anmelderin genau fünf, Spannbacken angeordnet und radial in Bezug auf die Längsachse des Spannfutters bewegbar gehalten. Weiterhin besitzen die bekannten Spannfutter einen zumindest teilweise hohl ausgebildeten Spannkolben, welcher in der zentralen Aufnahme des Grundkörpers platziert und axial zwischen einer hinteren und einer vorderen Endstellung bewegbar gehalten ist. Der Spannkolben weist fünf axiale Durchgangsöffnungen auf, welche von den Spannbacken durchgriffen werden, so dass diese nach vorne aus dem Spannkolben ragen bzw. aus diesem austreten können. Der Spannkolben und die Spannbacken sind mit zueinander korrespondierenden Schrägflächen versehen, die miteinander in der Weise zusammenwirken, dass eine axiale Stellbewegung des Spannkolbens in entsprechende Radialbewegungen der Spannbacken umgesetzt werden. Zur Führung der Radialbewegungen der Spannbacken weisen diese an ihrer radialen Außenseite prismatische Führungsflächen auf, die mit korrespondierenden Führungsflächen des Spannkolbens in Eingriff stehen.

Die bekannten Spannfutter haben sich in der Praxis durchaus bewährt. Allerdings ist die Herstellung der prismatischen Führungsflächen sehr aufwändig. Des Weiteren gehen die Bestrebungen dahin, die Präzision der Spannfutter weiter zu erhöhen.

Vor diesem Hintergrund liegt der vorliegenden Erfindung die Aufgabe zugrunde, eine Spann- oder Greifeinrichtung der eingangs genannten Art so auszugestalten, dass eine hohe Spannpräzision erreicht wird. Dabei soll der Herstellungsaufwand möglichst gering gehalten werden.

Diese Aufgabe ist gemäß der vorliegenden Erfindung gemäß dem Anspruch 1 gelöst.

Gemäß des Erfindung ist vorgesehen, dass jede Führungsnut eine radial innere Führungsfläche und eine radial äußere Führungsfläche aufweist und die zugeordnete Führungsnase mit beiden Führungsflächen in Kontakt steht, so dass eine nach vorne gerichtete Axialbewegung des Spannkolbens durch ein Zusammenwirken der Außenfläche der Führungsnase mit der radial äußeren Führungsfläche der Führungsnut in eine radial nach außen gerichtete Bewegung der Spannbacken umgesetzt wird und eine nach hinten gerichtete Axialbewegung des Spannkolbens durch ein Zusammenwirken der Innenfläche der Führungsnase mit der radial inneren Führungsfläche in eine radial nach innen gerichtete Spannbewegung der Spannbacke umgesetzt wird.

Ferner sind die Führungsnasen an einem vorderen Endbereich des Spannkolbens bzw. am vorderen Ende der Durchgangsöffnungen, welche von den Spannbacken durchgriffen werden, ausgebildet. Damit erfolgt der Eingriff zwischen den Führungsnasen und den Führungsnuten der Spannbacken radial soweit innen wie möglich, so dass das Durchmesser/ Längen-Verhältnis der Spannbackenführungen minimiert wird. Ferner wird eine maximale Führungslänge gewährleistet.

Gemäß der Erfindung ist auch vorgesehen, dass in der vorderen Stirnfläche des Grundkörpers eine zentrale Aufnahme ausgebildet ist, in welche die Spannbacken und der Spannkolben angeordnet sind. Dabei kann vorgesehen sein, dass der Grundkörper axial unterteilt ist und ein die Aufnahme definierendes Grundkörperelement und ein den Führungszapfen tragendes Grundkörperelement aufweist, wobei die beiden Grundkörperelemente durch korrespondierende Zentriermittel zueinander ausgerichtet und miteinander lösbar verbunden, insbesondere verschraubt sind. Durch die geteilte Ausbildung des Grundkörpers wird eine einfache Herstellung insbesondere des Führungszapfens gewährleistet.

Die Führungsnuten sind in bevorzugter Weise nur an einer Seitenfläche der Spannbacken, und zwar an derjenigen Seitenfläche, welche in der Draufsicht in Richtung des entgegengesetzten Uhrzeigersinns weist, ausgebildet. Dieser Ausgestaltung liegt die Überlegung zugrunde, die Führungsflächen der Spannbacken, welche bei den bekannten Spannfuttern an der radialen Außenseite der Spannbacken vorgesehen sind, radial weiter nach innen in die Seitenflächen zu verlagern. Hierdurch verkleinert sich das Durchmesser/Längen-Verhältnis der Spannbackenführungen, wodurch eine erhöhte Stabilität und Führungsgenauigkeit erzielt wird.

Gemäß einer weiteren Ausführungsform der Erfindung ist vorgesehen, dass die Spannbacken mit ihrer hinteren Stirnfläche flächig an einer senkrecht zur Längsachse liegenden Kontaktfläche des Grundkörpers, insbesondere eines den Führungszapfen tragenden Grundkörperelements, anliegen. Druckkräfte, welche auf die Spannbacken führen, werden somit unmittelbar in den Grundkörper eingeleitet. Dabei kann am hinteren Ende der Spannbacken jeweils eine radiale Nut in einer Seitenfläche der Spannbacken ausgebildet sein, in welche ein Haltesteg eingreift, um die Spannbacke axial an der Anlagefläche zu sichern. Der Haltesteg besitzt dabei keine Führungs-, sondern nur eine Sicherungsfunktion. Die radialen Nuten können zweckmäßigerweise an derselben Seitenfläche der Spannbacken wie die Führungsnuten ausgebildet sein. Dann ist nur eine einseitige Bearbeitung der Spannbacken für die Herstellung der Nuten erforderlich.

Die Haltestege können an Halteelementen ausgebildet sein, welche an dem Grundkörper und insbesondere dem den Führungszapfen tragenden hinteren Grundkörperelement festgeschraubt sind.

Gemäß einer Ausführungsform der Erfindung ist vorgesehen, dass von dem Grundkörper ein koaxial zur Längsachse positionierter Führungszapfen abragt, an dessen Außenseite der Spannkolben axial bewegbar geführt ist.

Dieser Ausgestaltung liegt die Überlegung zugrunde, die Führung des Spannkolbens nicht mehr an seiner Außenfläche vorzunehmen, sondern nach innen zu verlagern, indem der Spannkolben an dem erfindungsgemäß vorgesehen Führungszapfen geführt wird. Durch die Verlagerung der Führung nach innen hin verkleinert sich das Durchmesser/Längen-Verhältnis der Führung, wodurch eine hohe Führungsstabilität und -qualität erreicht wird.

Gemäß einer weiteren Ausgestaltung der Erfindung ist vorgesehen, dass der Führungszapfen hülsenartig ausgebildet ist und an seinem vorderen Endbereich aus dem Grundkörper ragt, wobei in der Wandung des Führungszapfens Längsschlitze vorgesehen sind, welche von den Spannbacken durchgriffen werden. Diese Ausgestaltung bietet die Möglichkeit, die Spannbacken zusammenzufahren, bis sie einander berühren. Dazu sind die Längsschlitze zweckmäßigerweise zur vorderen Stirnseite des Führungszapfens hin offen.

Dabei trägt der Spannkolben zweckmäßigerweise an seinem rückseitigen Ende mehrere sich axial erstreckende Streben, welche entsprechend axiale Durchgangsöffnungen in dem den Führungszapfen tragenden Grundkörperelement durchgreifen, wobei die Streben an ihren freien Enden in bevorzugter Weise durch ein Verbindungselement miteinander verbunden, beispielsweise verschraubt sind. Das Verbindungselement kann beispielsweise als ein Verbindungsring ausgebildet sein. Die Funktion des Verbindungselements besteht im Wesentlichen darin, den Spannkolben mit einem entsprechenden Stellantrieb zu verbinden.

Gemäß einer Ausgestaltung der Erfindung ist vorgesehen, dass der Grundkörper an seiner Rückseite eine zentrale Ausnehmung aufweist, in welche die Streben münden, wobei die Ausnehmung insbesondere eine derartige Tiefe besitzt, dass in der hinteren Position des Spannkolbens die freien Enden der Streben bzw. dass die freien Enden der Streben verbindende Verbindungselement noch innerhalb der Ausnehmung liegen. Die Ausnehmung hat dabei zunächst den Zweck, einen Stellantrieb zur Betätigung des Spannkolbens ganz oder teilweise aufzunehmen. Weiterhin kann das Verbindungselement in der zentralen Ausnehmung axial geführt sein. Der Spannkolben wird dann über die Wandung des Führungszapfens und über die Ausnehmung geführt. Damit verkleinert sich das Durchmesser/Längen-Verhältnis zusätzlich.

Der Stellantrieb für den Spannkolben kann in üblicher Weise ein kraftbetätigter Antrieb sein. So sind beispielsweise hydraulische oder motorische Antriebe möglich, die es erlauben, den Spannkolben axial zu verstellen. Alternativ sind auch manuelle Stellantriebe möglich.

Gemäß einer Ausführungsform der Erfindung ist vorgesehen, dass das Verbindungselement ringförmig ausgebildet ist und ein Innengewinde aufweist, in welches ein Gewindebolzen eingeschraubt ist, der in dem Grundkörper drehbar, aber axialfest gehalten ist, und dass Antriebsmittel vorgesehen sind, um den Gewindebolzen zu drehen. Dabei kann an dem Gewindebolzen ein Zahnkranz drehfest gehalten sein, der von außen insbesondere durch eine Betätigungsöffnung in dem Grundkörper, mittels eines Betätigungselements in Drehung versetzbar ist. Der Zahnkranz kann beispielsweise in Form einer Stirnverzahnung ausgebildet sein. Bei dieser Ausführungsform wird durch die Betätigungsöffnung in den Grundkörper ein Betätigungselement, wie beispielsweise ein Betätigungsschlüssel, der mit einer zu der Stirnverzahnung des Zahnkranzes korrespondierende Verzahnung aufweist, in den Grundkörper eingesetzt und in Eingriff mit dem Zahnkranz gebracht. Durch Verdrehen des Betätigungsschlüssels wird auch der Zahnkranz und mit diesem der Gewindebolzen gedreht. In der Folge wird das Verbindungselement, welches sich nicht drehen kann, zusammen mit dem damit verbundenen Spannkolben axial bewegt, und diese Axialbewegung des Spannkolbens wird in eine entsprechende Radialbewegung der Spannbacken umgesetzt.

Nach einer alternativen Ausgestaltung ist vorgesehen, dass das Verbindungselement ringförmig ausgebildet ist, dass in dem Grundkörper, insbesondere in einem den Führungszapfen tragenden Grundkörperelement eine Achse halten ist, dass an der Achse eine Zwischenachse axial verstellbar gehalten ist, welche das Verbindungselement axial durchgreift, dass Federelemente, insbesondere Druckfederelemente vorgesehen sind, die sich zwischen dem Verbindungselement und der Zwischenachse abstützen, um das Verbindungselement nach hinten zu drücken, wobei Anschlagmittel vorgesehen sind, welche einen axialen Verstellweg des Verbindungselements nach hinten hin begrenzen, und dass das hintere Ende des Grundkörpers verschlossen ist, so dass zwischen dem Verbindungselement und dem Gehäusekörper an der Rückseite des Verbindungselements in der zentralen Ausnehmung ein Druckraum ausgebildet wird, welcher über eine Druckleitung von außen mit einem Druck beaufschlagbar ist, um das Verbindungselement entgegen der Rückstellkraft der Druckfederelemente nach vorne zu bewegen.

Bei dieser Ausführungsform wird das Werkstück über die Druckfederelemente gespannt. Hierbei wird zunächst der Druckraum, welcher an der Rückseite des Verbindungselementes ausgebildet ist, über die vorgesehene Druckleitung von außen mit einem Druck (beispielsweise pneumatisch oder hydraulisch) beaufschlagt, um das Verbindungselement aus seiner hinteren Endposition, welche durch die Anschlagmittel definiert ist, nach vorne zu drücken und so das Spannfutter zu öffnen. Wenn anschließend der Druckraum entlastet wird, wird das Verbindungselement durch die Rückstellkraft der Federelemente wieder nach hinten gedrückt, um das Spannfutter zu schließen und so ein Bauteil zu spannen. Die Fixierung des Bauteils erfolgt dabei mit der Federkraft der Federelemente.

Der Arbeitshub des Verbindungselementes kann dabei durch eine entsprechende Positionierung der Anschlagmittel sowie einer entsprechenden Anschlagfläche der Zwischenachse, an welcher sich die Federelemente abstützen, vorgegeben werden. Damit lassen sich relativ kleine Spannwege von wenigen Millimetern einstellen. Dies vereinfacht das Spannen von kleinen Bauteilen. Ebenso kann durch geeignete Auswahl der Federelemente auch die Spannkraft gering gewählt werden, so dass sich auch empfindliche Bauteile ohne die Gefahr von Beschädigungen spannen lassen.

Dabei kann der Spanndurchmesserbereich vorgegeben werden, indem die Zwischenachse axial verstellt wird.

Beispielsweise kann die Zwischenachse an ihrem vorderen Endbereich ein Außengewinde aufweisen, das in eine korrespondierende Gewindebohrung des Führungszapfens eingeschraubt ist, so dass die Zwischenachse durch Verdrehen um Ihre Längsachse axial verstellt werden kann. Hierzu kann die Zwischenachse an ihrem vorderen Endbereich entsprechende Eingriffsmittel für ein Drehwerkzeug aufweisen.

Die Anschlagmittel können insbesondere in Form eines radial vorstehenden Absatzes am hinteren Endbereich der Zwischenachse vorgesehen sein.

Gemäß einer Weiterbildung ist vorgesehen, dass eine Zwischenhülse auf die Zwischenachse aufgeschoben ist und an ihrem vorderen Endbereich an einem Axialanschlag der Zwischenachse anliegt, wobei sich die Federelemente zwischen dem Verbindungselement und der Zwischenhülse abstützen. Bei dieser Ausführungsform wird die Zwischenhülse über die Federelemente in ständigem Anschlag an der Zwischenachse gehalten. Durch eine geeignete Wahl der Länge der Zwischenhülse kann auf einfache Weise der Arbeitsschub des Spannkolbens eingestellt werden.

Zweckmäßigerweise ist der Ringspalt, welcher zwischen dem Verbindungselement und der Zwischenachse besteht, abgedichtet, um zu verhindern, dass Druckluft aus dem Druckraum an der Rückseite des Verbindungselements zu dessen Vorderseite gelangt, was zu Funktionsstörungen führen könnte. Ebenso kann das Verbindungselement außenseitig gegenüber dem Grundkörper abgedichtet sein.

Weiter kann die Zwischenachse ein an der Achse axial verschiebbar, aber drehfest gehaltenes Hülsenelement und einen an dem freien Ende des Hülsenelements fixierten Gewindekopf aufweisen, welcher ein mit der Gewindebohrung des Führungszapfens in Eingriff stehendes Außengewinde aufweist, umfassen. Diese geteilte Ausführungsform der Zwischenachse ermöglicht es, die Zwischenhülse an der Zwischenachse in einfacher Weise zu fixieren und insbesondere auch auszutauschen.

Um die Zwischenachse zu verdrehen, ist in bevorzugter Weise der Führungszapfen hülsenartig ausgebildet, so dass der Gewindekopf der Zwischenachse durch den Führungszapfen zugänglich ist, und in dem Gewindekopf Eingriffsmittel für ein Drehwerkzeug ausgebildet, über welches die Zwischenachse gedreht und so axial gegenüber dem Grundkörper verstellt werden kann.

Gemäß einer alternativen Ausführungsform ist vorgesehen, dass ein Gewindebolzen an der Achse axialfest, aber um seine Längsachse drehbar gehalten ist und die Zwischenachse auf den Gewindebolzen aufgeschraubt ist, so dass die Zwischenachse durch Verdrehen des Gewindebolzens axial verstellbar ist, und dass Antriebsmittel vorgesehen sind, um den Gewindebolzen zu drehen. Beispielsweise kann an dem Gewindebolzen ein Zahnkranz drehfest gehalten sein, der von außen insbesondere durch eine Betätigungsöffnung an dem Grundkörper mittels eines Betätigungselements in Drehung versetzbar ist. Der Zahnkranz kann eine Stirnverzahnung aufweisen.

In bevorzugter Weise umfasst die erfindungsgemäße Spann- oder Greifeinrichtung drei oder mehr Spannbacken. Insbesondere können genau fünf oder genau sechs Spannbacken vorgesehen sein.

Hinsichtlich weiterer vorteilhafter Ausgestaltungen der Erfindung wird auf die nachfolgende Beschreibung von drei Ausführungsbeispielen unter Bezugnahme auf die beiliegende Zeichnung verwiesen. In der Zeichnung zeigt
- Figur 1: in perspektivischer Vorderansicht eine erste Ausführungsform einer erfindungsgemäßen Spann- oder Greifeinrichtung gemäß der vorliegenden Erfindung im geöffneten Zustand,
- Figur 2: die Spann- oder Greifeinrichtung aus Figur 2 in perspektivischer Ansicht von unten,
- Figur 3: die Spann- oder Greifeinrichtung aus Figur 1 im geschlossenen Zustand,
- Figur 4: die Spann- oder Greifeinrichtung aus Figur 3 in perspektivischer Ansicht von schräg unten,
- Figur 5: die Spann- oder Greifeinrichtung aus Figur 1 in Draufsicht,
- Figur 6: die Spann- oder Greifeinrichtung aus Figur 5 im Schnitt entlang der Linie A-A,
- Figur 7: die Spann-oder Greifeinrichtung aus Figur 5 im Schnitt entlang der Linie B-B,
- Figur 8: einen Ausschnitt der Schnittdarstellung der Spann- oder Greifeinrichtung aus Figur 6 im Schnitt entlang der Linie E-E, welcher in vergrößerter Darstellung den Eingriff einer Führungsnase des Kolbens mit einer Führungsnut einer Spannbacke zeigt,
- Figur 9: einen Ausschnitt der Schnittdarstellung aus Figur 6 im Schnitt entlang der Linie P3-P3,
- Figur 10: die Spann- oder Greifeinrichtung aus Figur 3 in Draufsicht,
- Figur 11: die Spann- oder Greifeinrichtung aus Figur 10 im Längsschnitt entlang der Linie A-A,
- Figur 12: in perspektivischer Vorderansicht eine zweite Ausführungsform einer erfindungsgemäßen Spann- oder Greifeinrichtung im geöffneten Zustand,
- Figur 13: die Spann-oder Greifeinrichtung aus Figur 12 im geschlossenen Zustand,
- Figur 14: die Spann- oder Greifeinrichtung aus Figur 12 in Draufsicht,
- Figur 15: die Spann- oder Greifeinrichtung aus Figur 14 im Längsschnitt entlang der Linie A-A,
- Figur 16: in vergrößerter Darstellung einen Ausschnitt einer Schnittdarstellung der Spann- oder Greifeinrichtung aus Figur 14 entlang der Linie D-D, welche den Betätigungsmechanismus für den Spannkolben zeigt,
- Figur 17: die Spann- oder Greifeinrichtung aus Figur 13 in Draufsicht,
- Figur 18: die Spann- oder Greifeinrichtung aus Figur 17 in Vorderansicht,
- Figur 19: die Spann- oder Greifeinrichtung aus Figur 17 im Längsschnitt entlang der Linie A-A,
- Figur 20: in perspektivischer Vorderansicht eine dritte Ausführungsform einer erfindungsgemäßen Spann- oder Greifeinrichtung im geöffneten Zustand,
- Figur 21: die Spann- oder Greifeinrichtung aus Figur 20 im geschlossenen Zustand,
- Figur 22: die Spann- oder Greifeinrichtung aus Figur 20 in Draufsicht,
- Figur 23: die Spann- oder Greifeinrichtung aus Figur 22 im Längsschnitt entlang der Linie A-A, wobei sich die Spannbacken in ihrem völlig geöffneten Zustand befinden und der Druckraum druckbeaufschlagt ist,
- Figur 24: die Spann- oder Greifeinrichtung aus Figur 22 im Längsschnitt entlang der Linie B-B, wobei sich die Spannbacken in ihrem völlig geöffneten Zustand befinden und der Druckraum druckbeaufschlagt ist,
- Figur 25: die Spann- oder Greifeinrichtung aus Figur 22 entlang der Linie D-D, wobei nur ein vergrößerter Teilausschnitt am unteren Endbereich gezeigt ist,
- Figur 26: die Spann- oder Greifeinrichtung aus Figur 23, wobei der Druckraum entlastet ist,
- Figur 27: die Spann- oder Greifeinrichtung aus Figur 23, bei welchem der eingestellte Spanndurchmesser verringert und der Druckraum druckbeaufschlagt ist,
- Figur 28: die Spann- oder Greifeinrichtung aus Figur 27, wobei der Druckraum entspannt ist,
- Figur 29: eine vierte Ausführungsform einer erfindungsgemäßen Spannoder Greifeinrichtung in Draufsicht,
- Figur 30: die Spann- oder Greifeinrichtung aus Figur 29 im Längsschnitt entlang der Linie A-A, wobei sich die Spannbacken in ihrem völlig geöffneten Zustand befinden und der Druckraum druckbeaufschlagt ist,
- Figur 31: die Spann- oder Greifeinrichtung aus Figur 29 im Längsschnitt entlang der Linie B-B, wobei sich die Spannbacken in ihrem völlig geöffneten Zustand befinden und der Druckraum druckbeaufschlagt ist,
- Figur 32: die Spann- oder Greifeinrichtung aus Figur 29 im Schnitt entlang der Linie D-D, welche den Betätigungsmechanismus für den Gewindebolzen zeigt,
- Figur 33: die Spann- oder Greifeinrichtung aus Figur 30, wobei der Druckraum entlastet ist,
- Figur 34: die Spann- oder Greifeinrichtung aus Figur 33 im Längsschnitt entlang der Linie P4-P4,
- Figur 35: die Spann- oder Greifeinrichtung aus Figur 30, bei welcher der eingestellte Spanndurchmesser auf das Minimum reduziert und der Druckraum entlastet ist,

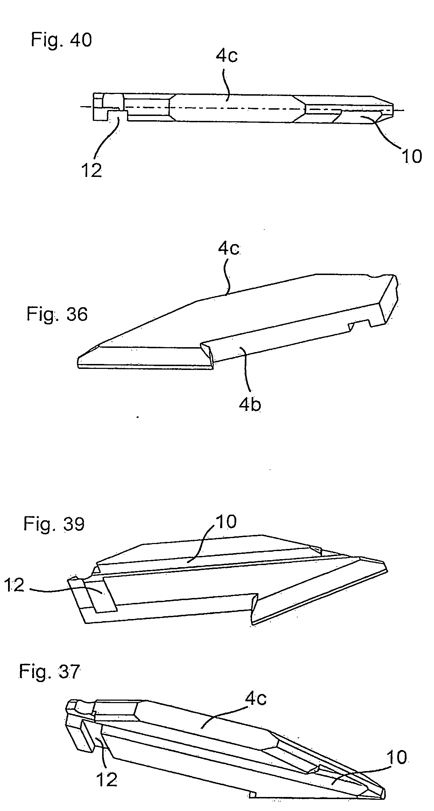

- Figur 36: eine Spannbacke einer erfindungsgemäßen Spann- oder Greifeinrichtung in perspektivischer Vorderansicht von schräg unten,
- Figur 37: die Spannbacke aus Figur 36 in perspektivischer Vorderansicht von schräg oben,

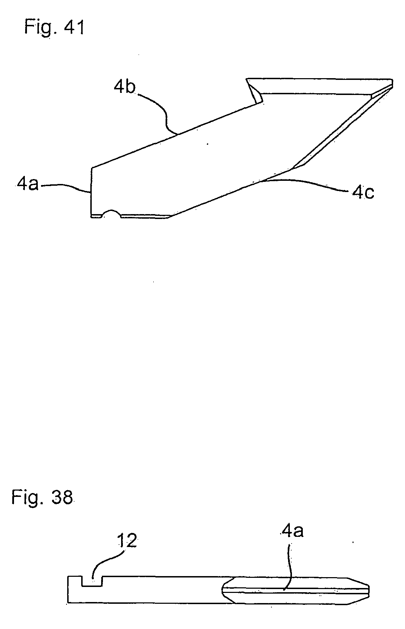

- Figur 38: die Spannbacke aus Figur 36 von unten betrachtet,
- Figur 39: die Spannbacke aus Figur 36 in einer perspektivischen Ansicht von schräg unten/hinten,
- Figur 40: die Spannbacke aus Figur 36 in Draufsicht und
- Figur 41: die Spannbacke aus Figur 36 in Rückansicht.

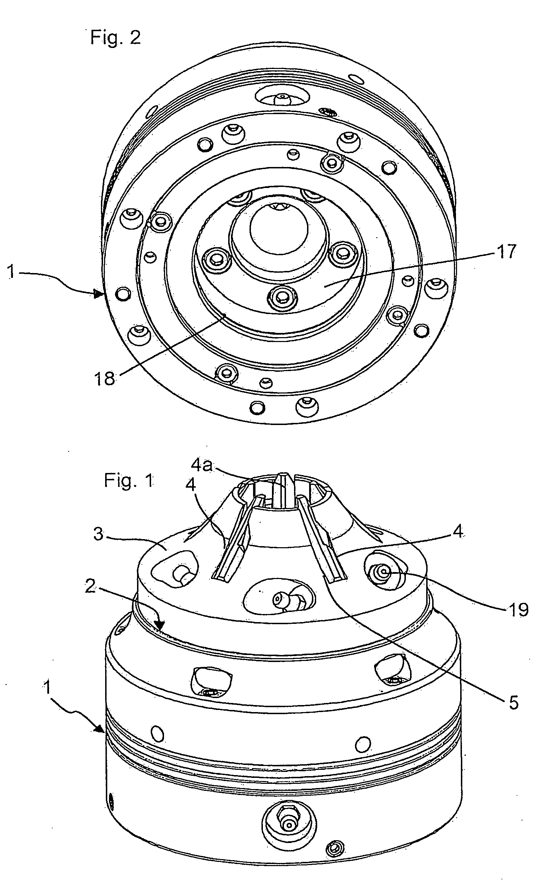

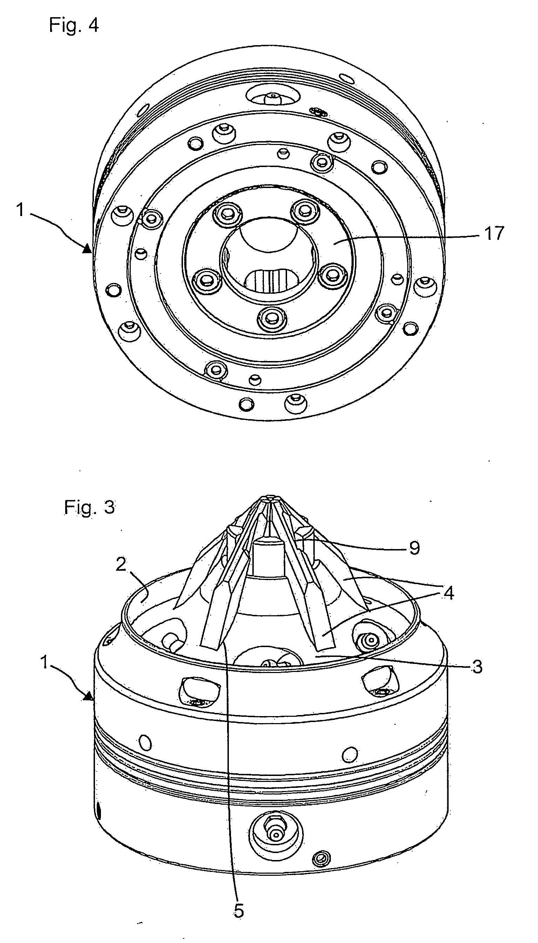

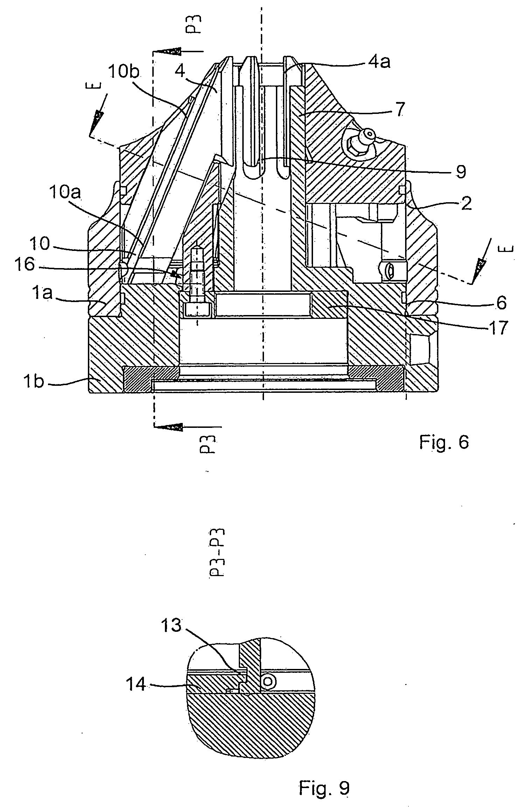

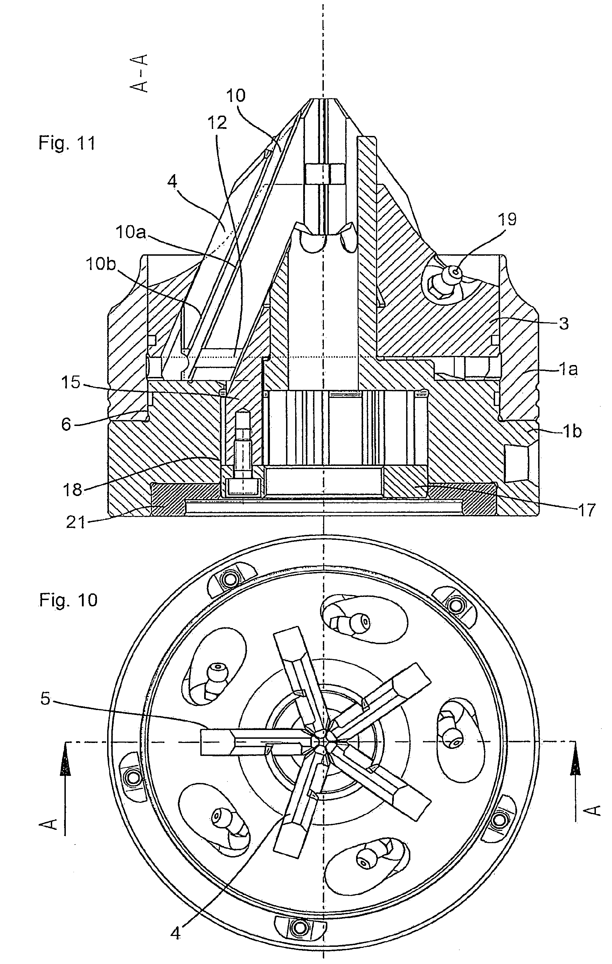

In den Figuren 1 bis 11 ist eine erste Ausführungsform einer erfindungsgemäßen Spann- oder Greifeinrichtung gemäß der vorliegenden Erfindung dargestellt. Diese ist hier als ein Präzisions-Spannfutter ausgebildet, das insbesondere zum Schleifen von Werkzeugen eingesetzt wird. Das Spannfutter umfasst einen Grundkörper 1 aus einem formsteifen Material, der eine zylindrische Grundform besitzt. In dem Grundkörper 1 ist eine zentrale Aufnahme 2 ausgebildet, die eine Längsachse X des Spannfutters definiert und zu einer vorderen Stirnfläche des Grundkörpers 1 offen ausgebildet ist. In der zentralen Aufnahme 2 des Grundkörpers 1 ist ein Spannkolben 3 eingesetzt und darin axial, d.h. in Richtung der Längsachse X, zwischen einer hinteren und einer vorderen Endstellung bewegbar gehalten. Der Spannkolben 3 besitzt eine zylindrische Grundform, wobei jedoch die vordere Stirnfläche kegelstumpfförmig zum vorderen Ende zuläuft.

Das Spannfutter umfasst weiterhin insgesamt fünf Spannbacken 4, die ebenfalls in der zentralen Aufnahme 2 des Grundkörpers 1 positioniert und radial zwischen einer äußeren, offenen Stellung und einer inneren Spannstellung gemeinsam bewegbar sind. Die Spannbacken 4 werden von dem Spannkolben 3 umgriffen und sind in entsprechenden Durchgangsöffnungen 5 des Spannkolbens 3, welche von den Spannbacken 4 axial durchgriffen werden, so dass diese nach vorne aus dem Spannkolben 3 ragen, gehalten. Die Spannbacken 4 sind seitlich in den Durchgangsöffnungen 5 geführt und abgestützt. Die Spannbacken 4 laufen dabei an ihrem oberen Ende spitz zu und definieren am Bereich ihrer vorderen Enden radial nach innen weisenden Spannflächen 4a. Ferner weisen die Spannbacken 4 an ihrer radialen Außenseite eine geneigte Außenfläche 4c und an ihrer radialen Innenseite unterhalb der Spannflächen 4a eine geneigte Innenfläche 4b auf. Die diesen radialen Innen- und Außenflächen 4b, 4c zugeordneten Wandungen des Spannkolbens 3, welche die Durchgangsöffnungen 5 des Spannkolbens 3 definieren, sind entsprechend geneigt.

Der Grundkörper 1 ist axial unterteilt und weist ein vorderes, hülsenartig ausgebildetes und die Aufnahme 2 definierendes Grundkörperelement 1a, und ein hinteres Grundkörperelement 1b auf, wobei die beiden Grundkörperelemente 1a, 1b koaxial zueinander ausgerichtet und miteinander lösbar verbunden, hier verschraubt sind. Zur Ausrichtung der beiden Grundkörperelemente 1a, 1b ist an dem hinteren Grundkörperelement 1b ein ringförmiger Absatz ausgebildet, welcher in die Aufnahme 2 des vorderen Grundkörperelements 1 a eingreift.

Das hintere Grundkörperelement 1b trägt an seiner vorderen Stirnfläche welche in der zentralen Aufnahme 2 positioniert ist, einen Führungszapfen 7, der hülsenartig ausgebildet ist und die Aufnahme 2 durchgreift. Die Außenfläche des Führungszapfens 7 bildet dabei eine zylindrische Führungsfläche, an welcher der Spannkolben 3 axial bewegbar geführt ist. Hierzu weist der Spannkolben 3 eine entsprechende Führungsfläche 8 auf. In der Wandung des Führungszapfens 7 sind insgesamt fünf Längsschlitze 9 vorgesehen, die zur vorderen Seite des Führungszapfens 7 offen sind und von den Spannbacken 4 radial durchgriffen werden.

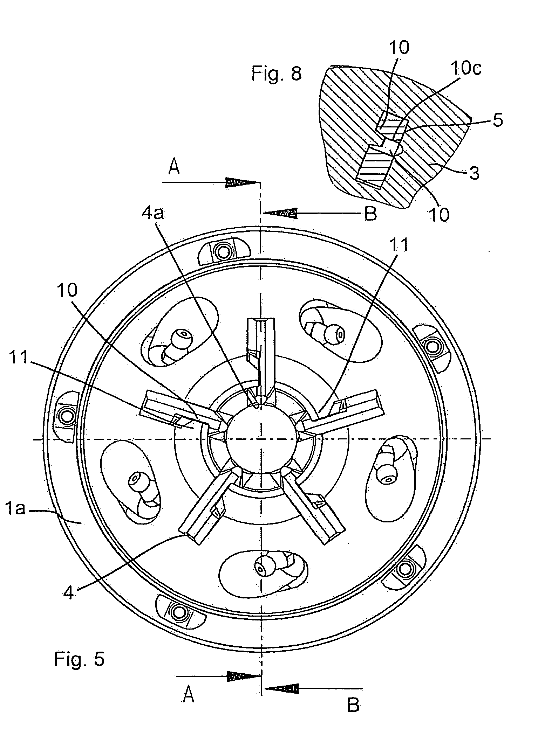

Die Spannbacken 4 weisen jeweils in ihrer Seitenfläche, welche in der Draufsicht der Figur 5 in Richtung des entgegengesetzten Uhrzeigersinns weist, eine Führungsnut 10 auf. Die Führungsnuten 10 erstrecken sich dabei jeweils von der hinteren Stirnfläche der Spannbacken 4 bis knapp unterhalb von deren vorderen Ende und sind geneigt zur Längsachse X des Spannfutters ausgerichtet. Die Neigung entspricht dabei der Neigung der geneigten Innen- und Außenflächen 4b, 4c der Spannbacken 4. Den Führungsnuten 10 ist jeweils eine Führungsnase 11 zugeordnet, welche an dem Spannkolben 3 gehalten ist und am radial inneren Ende der Durchgangsöffnungen 5 des Spannkolbens 3 positioniert sind und in die Führungsnuten 10 eingreifen. Dabei weist jede Führungsnut 10 eine radial innere Führungsfläche 10a und eine radial äußere Führungsfläche 10b auf und die zugeordnete Führungsnase 11 steht mit beiden Führungsflächen 10a, 10b in Kontakt, so dass eine nach vorne gerichtete Axialbewegung des Spannkolbens 3 durch ein Zusammenwirken der Außenfläche der Führungsnase 11 mit der radial äußeren Führungsfläche 10b der Führungsnut 10 in eine radial nach außen gerichtete Bewegung der Spannbacken 4 umgesetzt wird und in umgekehrter Weise eine nach hinten gerichtete Axialbewegung des Spannkolbens 3 durch ein Zusammenwirken der Innenfläche der Führungsnase 11 mit der radial inneren Führungsfläche 10a der Führungsnut 10 in eine radial nach innen gerichtete Spannbewegung der Spannbacken 3 umgesetzt wird. Bei diesen Axialbewegungen wird der Spannkolben 3 innen an dem Führungszapfen 7 geführt. Aufgrund des geringen Durchmessers der Führungshülse 7 und der zur Verfügung stehenden Führungslänge ergibt sich ein gutes Durchmesser/Längen-Verhältnis für die Führung, so dass diese stabil ist.

Die Spannbacken 4 können ferner vollständig zusammengefahren werden, so dass auch sehr kleine Durchmesser gespannt werden können. Durch die radial weit innen liegende Position der Führungsnasen 11 ist auch das Durchmesser/Längen-Verhältnis der Führungen für die Spannbacken 4 klein, so dass eine hohe Stabilität erzielt wird. Ferner ist von Vorteil, dass die Führungsnasen 11 am axial vorderen Ende und damit im Bereich der Spannflächen 4a, wo die höchste Führungsgenauigkeit erforderlich ist, liegen.

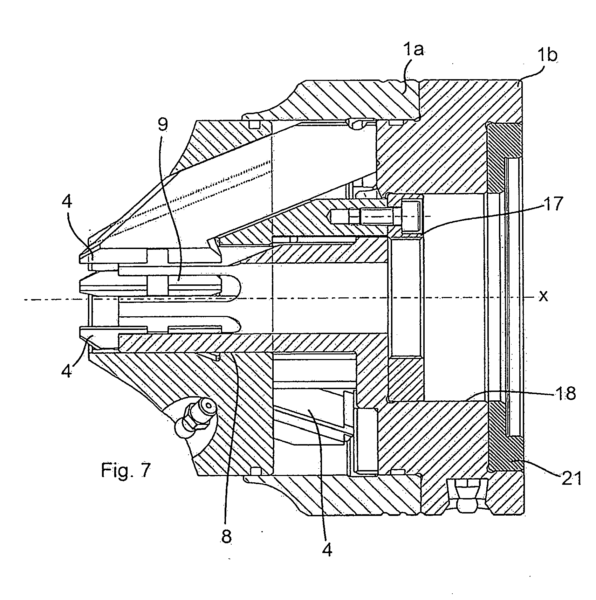

Wie die Figuren 7 und 8 gut erkennen lassen, liegen die Spannbacken 4 jeweils mit ihrer hinteren Stirnfläche an einer senkrecht zur Längsachse X liegenden Kontaktfläche des hinteren Grundkörperelements 1b an, die hiervon der vorderen Stirnfläche des hinteren Grundkörperelements 1 b gebildet wird. Weiterhin ist am hinteren Ende der Spannbacken 4 jeweils eine radiale Nut 12 in derjenigen Seitenfläche der Spannbacken 4, in welcher auch die Führungsnuten 10 ausgebildet sind, vorgesehen. In die radiale Nut 12 greift ein Haltesteg 13 ein, um die Spannbacken 4 axial an der Kontaktfläche zu sichern. Die Haltestege 13 sind dabei an Halteelementen 14 ausgebildet, welche an dem hinteren Grundkörperelement 1b festgeschraubt sind.

Um den Spannkolben 3 axial zu verstellen, trägt dieser an seinem rückseitigen Ende mehrere sich axial erstreckende Streben 15, welche entsprechende axiale Durchgangsöffnungen 16 in dem hinteren Grundkörperelement 1b durchgreifen. Die Streben 15 sind an ihren freien Enden durch einen Verbindungsring 17 miteinander verbunden, welcher an den Streben 15, nämlich den zur Rückseite weisenden Stirnflächen der Streben 15, verschraubt ist. Der Verbindungsring 17 ist in einer zentralen Ausnehmung 18 axial verschiebbar gehalten, welche in dem hinteren Grundkörperelement 1 b ausgebildet und zu dessen Rückseite offen ist. An dem Verbindungsring 17 greift ein hier nicht näher dargestellter Stellantrieb, der beispielsweise in Form eines Motors, eines Hydraulikantriebs oder dergleichen ausgebildet sein kann, ein.

Im Übrigen sind an dem Spannkolben 3 insgesamt fünf Schmiernippel 19 vorgesehen, über welche den Durchgangsöffnungen 5 des Spannkolbens 3, in welchen die Spannbacken 4 positioniert sind, ein Schmiermittel zugeführt werden kann.

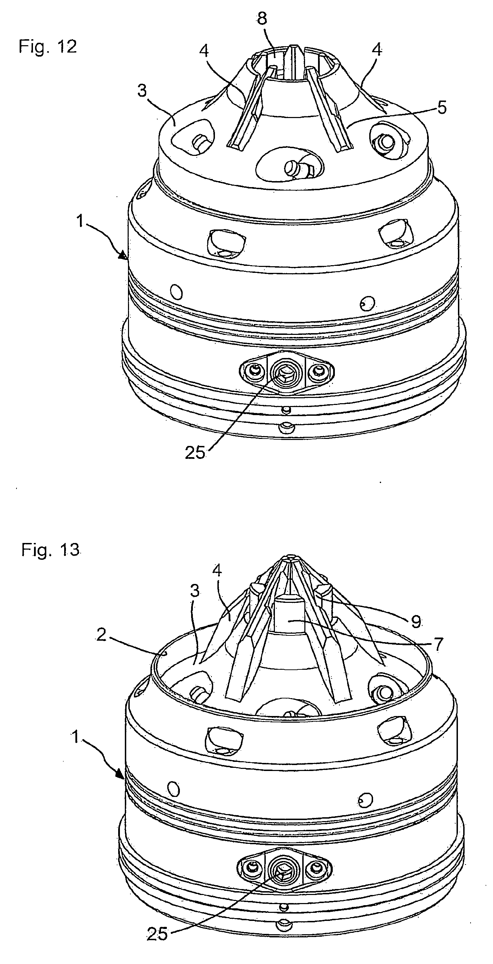

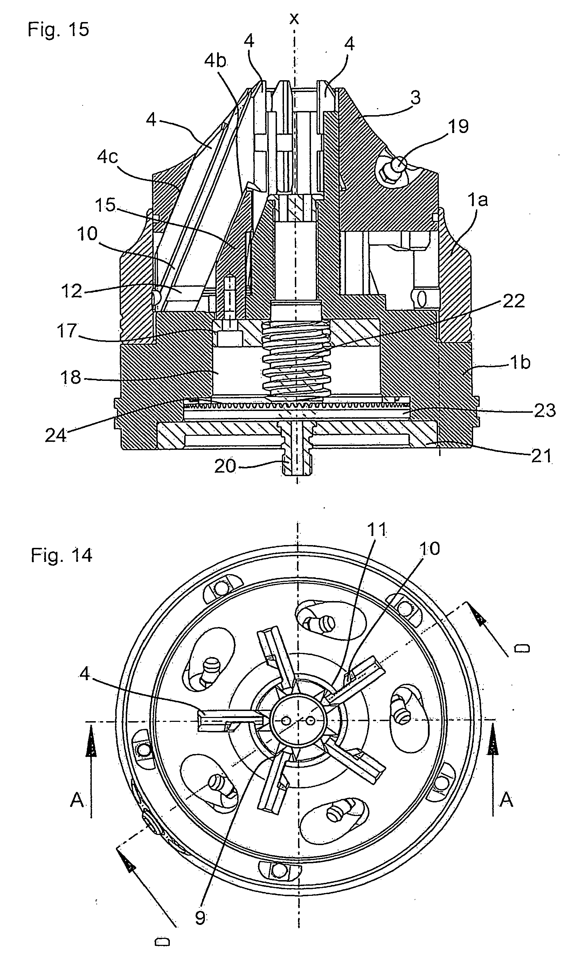

In den Figuren 12 bis 19 ist eine zweite Ausführungsform eines erfindungsgemäßen Spannfutters dargestellt. Diese entspricht der zuvor anhand der Figuren 1 bis 10 beschriebenen Ausführungsform. Der einzige Unterschied besteht darin, dass ein manueller Stellantrieb zur Verstellung des Spannkolbens 3 vorgesehen ist. Dieser umfasst einen Gewindebolzen 20, der in dem hinteren Grundkörperelement 1 b drehbar, aber axial festgehalten ist. Konkret ist der Gewindebolzen 20 an seinem vorderen Ende in der Führungshülse 7 drehbar gehalten, und an seinem hinteren Ende ist er in einem Deckel 21 fixiert, welcher die Ausnehmung 18 des hinteren Grundkörperelements 1b an seiner offenen Rückseite verschließt. Der Gewindebolzen 20 ist hier zweiteilig ausgebildet und umfasst ein erstes Gewindebolzenelement 20a, welches an dem Deckel 21 gehalten ist, und ein zweites Gewindebolzenelement 20b, welches auf das erste Gewindebolzenelement 20a aufgeschoben und an diesem drehfest gehalten ist. Das zweite Gewindebolzenelement 20b weist dabei ein Außengewinde 22 auf, welches den Verbindungsring 17 durchgreift und in diesen eingeschraubt ist, wozu der Verbindungsring 17 mit einem entsprechenden Innengewinde versehen ist. Das zweite Gewindebolzenelement 20b umfasst ferner einen Zahnkranz 23, der radial nach außen abragt und an seiner nach vorne weisenden Stirnseite eine Stirnverzahnung 24 trägt.

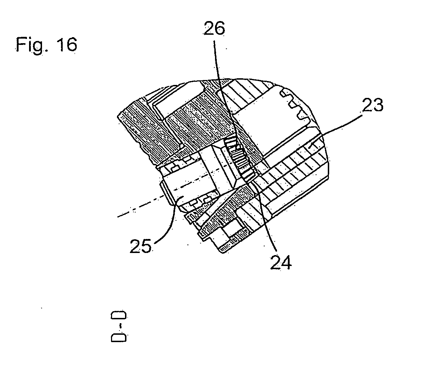

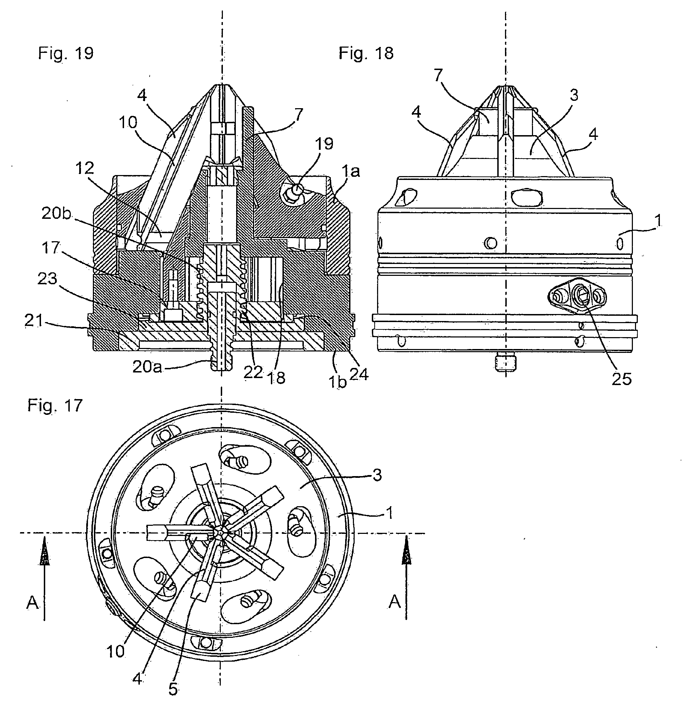

Wie insbesondere die Figuren 16 und 18 erkennen lassen, ist in dem Grundkörper 1 eine Betätigungsöffnung vorgesehen, in welche ein Betätigungselement 25 eingesetzt und drehbar gehalten ist. Das Betätigungselement 25 trägt an seinem in den Grundkörper 1 ragenden Ende eine Verzahnung 26, welche mit der Stirnverzahnung 24 des Zahnkranzes 23 in Eingriff steht, so dass eine Drehung des Betätigungselements 25 um seine Achse in eine Drehbewegung des Zahnkranzes 23 und damit des Gewindebolzens 20 um die Längsachse X in eine Axialbewegung des Verbindungsrings 17, der sich nicht drehen kann, umgesetzt wird mit der Folge, dass auch der Spannkolben 3 axial bewegt wird.

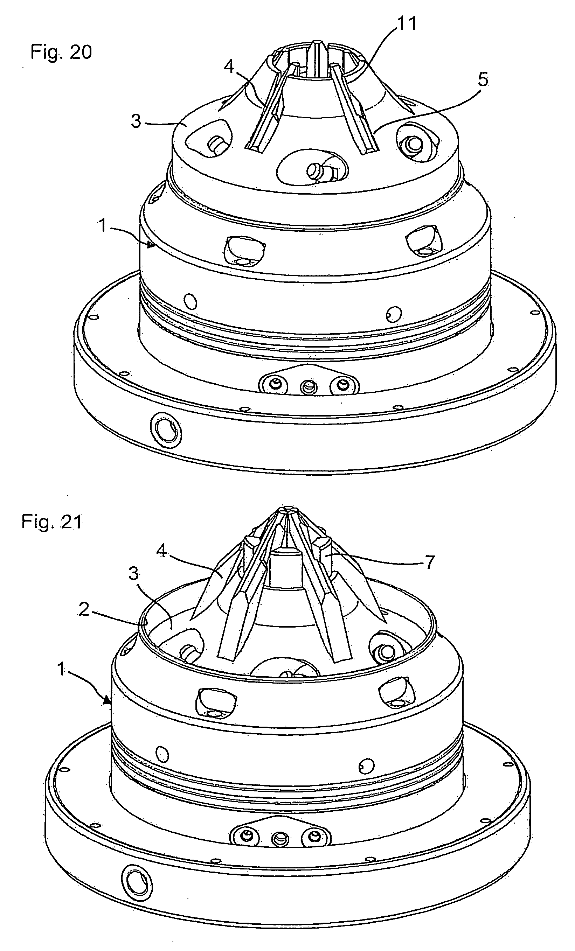

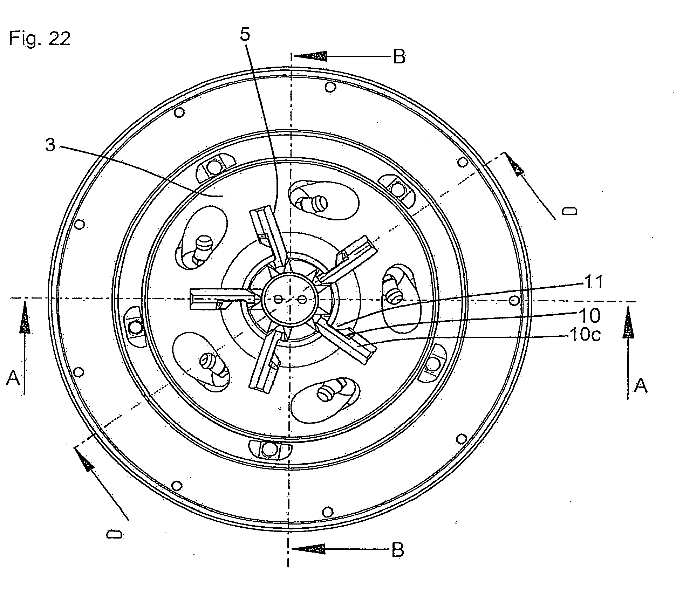

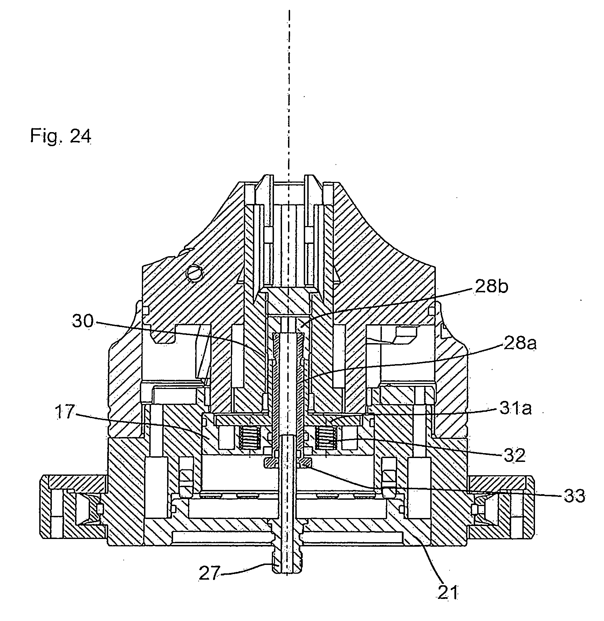

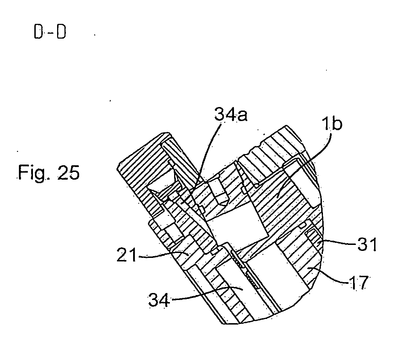

In den Figuren 20 bis 28 ist eine dritte Ausführungsform eines erfindungsgemäßen Spannfutters dargestellt. Dieses unterscheidet sich von den zuvor beschriebenen Ausführungsformen im Wesentlichen nur hinsichtlich der Ausgestaltung des Stellantriebes für den Spannkolben 3. Dieser ist in einer zentralen Ausnehmung 18 des Grundkörpers 1, hier des hinteren Grundkörperelements 1 b untergebracht, welche an ihrer offenen Rückseite durch einen Deckel 21 verschlossen ist. Der Stellantrieb umfasst eine Achse 27, welche an dem Deckel 21 an zentraler Position, d.h. koaxial zu der Längsachse X, gehalten ist und in die Ausnehmung 18 ragt. An der Achse 27 ist eine Zwischenachse 28 axial verschiebbar gehalten, wobei die Zwischenachse 28 an ihrem vorderen Ende ein Außengewinde 29 aufweist, das in eine korrespondierende Gewindebohrung 30 des hohl ausgebildeten Führungszapfens 7 eingeschraubt ist. Konkret umfasst die Zwischenachse 28 ein an der Antriebsachse 27 axial verschiebbar gehaltenes Hülsenelement 28a und einen an dem freien Ende des Hülsenelements 28a fixierten Gewindekopf 28b, welcher ein mit der Gewindebohrung 30 des Führungszapfens 7 in Eingriff stehendes Außengewinde aufweist. Die Zwischenachse 28 durchgreift den Verbindungsring 17 axial, wobei ein zwischen den Bauteilen gebildeter Ringspalt luftdicht abgedichtet ist. Die Zwischenachse 28 trägt wiederum eine Zwischenhülse 31, welche auf die Zwischenachse 28 aufgeschoben ist. Wie die Zeichnung gut erkennen lässt, liegt die Zwischenhülse 31 an ihrem oberen Ende an einem entsprechenden Absatz der Zwischenachse 28, der hier durch den Gewindekopf 28b gebildet wird, an, und weist an seinem unteren Ende einen Anlageflansch 31a auf.

Der Stellantrieb umfasst ferner mehrere Federelemente, hier Druckfederelemente 32, die sich zwischen dem Verbindungselement 17 und dem Anlageflansch 31a abstützen. In der dargestellten Ausführungsform sind die Druckfederelemente 32 in entsprechenden Bohrungen des Verbindungselementes 17 positioniert und stützen sich an ihrem oberen Endbereich an dem Anlageflansch 31a der Zwischenhülse 31 ab, so dass diese in Anlage an dem Gewindekopf 28b gehalten wird. Die Druckfederelemente 32 bewirken, dass das Verbindungselement 17 nach hinten gedrückt wird. Um den Bewegungsweg nach hinten zu begrenzen, sind an dem hinteren Endbereich der Zwischenachse 28 Anschlagmittel 33 vorgesehen, die hier in Form eines radial vorstehenden Absatzes ausgebildet sind.

Der an der Rückseite des Verbindungselements 17 vorgesehene Bereich der Ausnehmung 18 ist als ein Druckraum 34 ausgebildet, welcher über eine Druckleitung 34a von außen mit einem Druck beaufschlagbar ist.

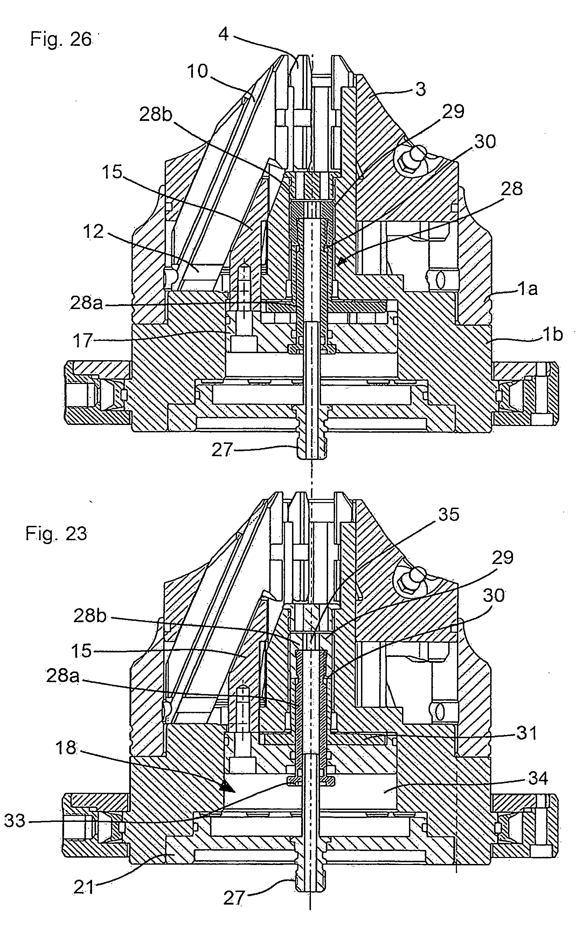

In der Figur 26 ist die Spanneinrichtung in einer Ausgangsstellung dargestellt, in welcher der Druckraum 34 drucklos ist und entsprechend das Verbindungselement 17 durch die Kraft der Druckfederelemente 32 nach unten gegen den Axialanschlag 33 der Zwischenachse 28 gedrückt wird. Wenn der Druckraum 34 nun mit einem Druckmedium, hier Druckluft beaufschlagt wird, wird das Verbindungselement 17 und damit der Spannkolben 3 entgegen der Rückstellkraft der Druckfederelemente 32 aus der in Figur 26 dargestellten Stellung in die in Figur 23 dargestellte Stellung angehoben, wodurch die Spannbacken 4 leicht geöffnet werden, um ein Bauteil einsetzen zu können. Wird anschließend der Druckraum 34 wieder entlastet, wird das Verbindungselement 17 durch die Rückstellkraft der Druckfederelemente 32 nach unten gedrückt, so dass die Spannbacken 4 geschlossen werden, um ein zwischen ihnen positioniertes Bauteil zu spannen. Die Fixierung des Bauteils zwischen den Spannbacken 4 erfolgt dabei allein durch die Federkraft der Druckfederelemente 32.

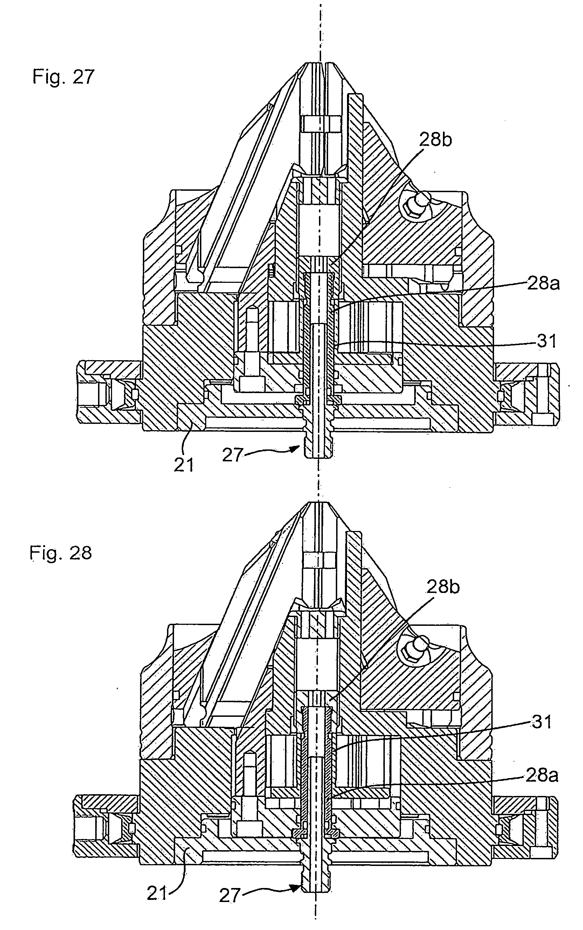

Wenn kleinere Bauteile gespannt werden sollen, wird die Position der Zwischenachse 28 mit dem daran gehaltenen Verbindungselement 17 verändert. Hierzu wird ein Innensechskantschlüssel von oben durch die Führungshülse 7 in einem entsprechenden Eingriffsbereich 35 des Gewindekopfes 28b gesteckt, um diesen weiter nach unten zu drehen. Dies ist bis in die in Figur 28 dargestellte untere Endlage möglich, in welcher das Verbindungselement 17 nahezu auf dem Deckel 21 aufliegt. Ein geringer Restspalt muss vorhanden sein, damit Druckluft noch zwischen den Deckel 21 und das Verbindungselement 17 gelangen kann. Durch die Verstellung der Zwischenachse 28 werden auch die Zwischenhülse 31 und der Verbindungskolben 17 nach unten bewegt, wodurch die Spannbacken 4 weiter geschlossen werden. Wird nun der Druckraum 34 mit Druck beaufschlagt, wird das Verbindungselement 17 aus der in Figur 28 dargestellten Lage in die Figur 27 dargestellte Lage angehoben. Dabei werden die Spannbacken 4 entsprechend des Verstellweges geöffnet, so dass ein Bauteil zwischen die Spannbacken 4 eingesetzt werden kann. Wird anschließend der Druckraum entlastet, wird das Verbindungselement 17 und damit der Spannkolben 3 durch die Rückstellkraft der Druckfederelemente 32 wieder abgesenkt, so dass das Bauteil zwischen den Spannbacken 4 fixiert wird.

Wenn der Arbeitshub des Verbindungselements 17 und damit des Spannkolbens 3 verändert werden soll, braucht lediglich eine kürzere Zwischenhülse 31 verwendet zu werden, ggf. ist es auch erforderlich, entsprechend Druckfederelemente 32 anderer Länge einzusetzen. Auch kann die Spannkraft individuell vorgegeben werden, indem Druckfederelemente 32 entsprechender Steifigkeit verwendet werden.

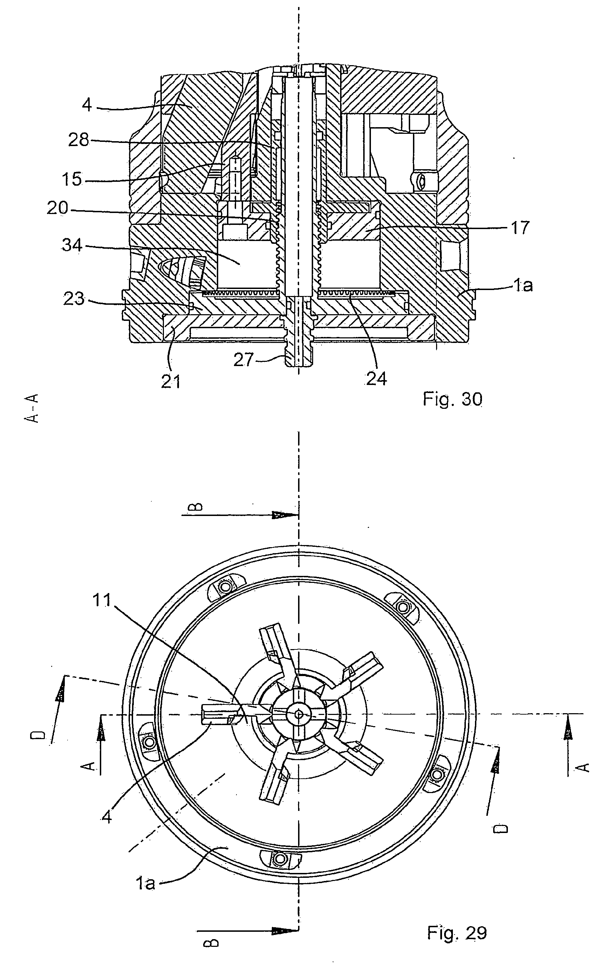

In den Figuren 29 bis 35 ist schließlich eine vierte Ausführungsform eines erfindungsgemäßen Spannfutters dargestellt, welches sich von den zuvor beschriebenen Ausführungsformen im Wesentlichen hinsichtlich der Ausgestaltung des Stellantriebs für den Spannkolben 3 unterscheidet. Dieser Stellantrieb stellt technisch gesehen eine Kombination der Stellantriebe von der zweiten und dritten Ausführungsform dar. Der Spannkolben 3 ist in einer zentralen Ausnehmung 18 des Grundkörpers 1, hier des hinteren Grundkörperelements 1 b untergebracht, welche an ihrer offenen Rückseite durch einen Deckel 21 verschlossen ist. Der Stellantrieb umfasst eine Achse 27, welche an dem Deckel 21 an zentraler Position, d.h. koaxial zu der Längsachse X gehalten ist und in die Ausnehmung 18 ragt. An der Achse 27 ist ein Gewindebolzen 20 axialfest aber drehbar gehalten. Konkret ist der Gewindebolzen 20 an seinem vorderen Ende in der Führungshülse 7 drehbar gehalten, und an seinem hinteren Ende ist er auf die Achse 27 aufgeschoben. An dem Gewindebolzen 27 ist eine Zwischenachse 28 gehalten, die auf den Gewindebolzen 20 aufgeschraubt ist. Die Zwischenachse 28 durchgreift den Verbindungsring 17 axial, wobei ein zwischen den Bauteilen gebildeter Ringspalt luftdicht abgedichtet ist.

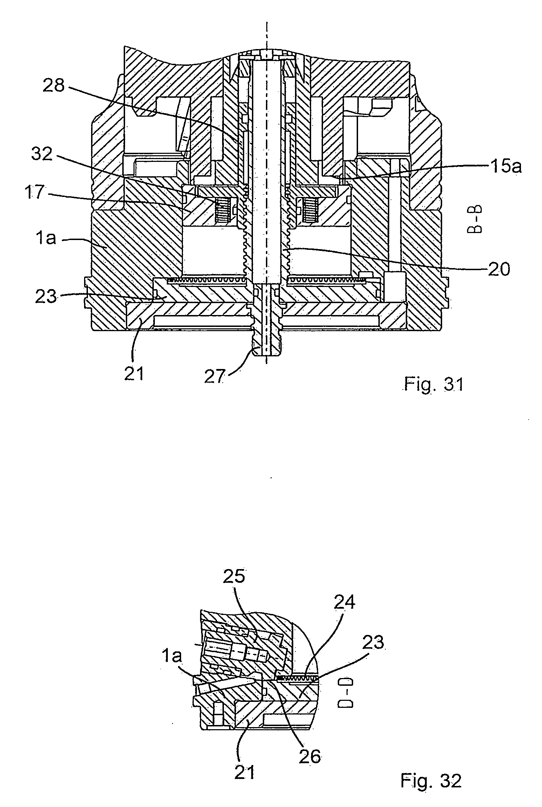

Der Gewindebolzen 20 trägt an seinem unteren Endbereich einen Zahnkranz 23, der radial nach außen abragt und an seiner vorderen Stirnfläche eine Stirnverzahnung 24 trägt. Wie insbesondere in Figur 32 gezeigt ist, ist in dem Grundkörper 1 eine Betätigungsöffnung vorgesehen, in welche ein Betätigungselement 25 eingesetzt und drehbar gehalten ist. Das Betätigungselement 25 trägt an seinem in den Grundkörper 1 ragenden Ende eine Verzahnung 26, welche mit der Stirnverzahnung 24 des Zahnkranzes 23 in Eingriff steht, so dass eine Drehung des Betätigungselements 25 um seine Achse in eine Drehbewegung des Zahnkranzes 23 und damit des Gewindebolzens 20 und die Längsachse X umgesetzt wird. Die Drehbewegung des Gewindebolzens 20 führt wiederum zu einer axialen Verstellung der Zwischenachse 28. Wenn die Zwischenachse 28 nach vorne verstellt wird, führt dies auch zu einer gleichzeitigen Verschiebung des Spannkolbens 3 nach vorne, so dass der Flansch der Zwischenachse 28 an dem Absatz 15a der Streben 15 in Anlage kommt und diese mitnimmt. Mit dem Spannkolben 3 wird auch das Verbindungselement 17 nach vorne bewegt.

Der Stellantrieb umfasst ferner mehrere Druckfederelemente 32, die sich zwischen dem Verbindungselement 17 und der Zwischenachse 28 abstützen. In der dargestellten Ausführungsform sind die Druckfederelemente 32 in entsprechenden Bohrungen des Verbindungselements 17 positioniert und stützen sich an ihrem oberen Endbereich an einem an der Zwischenachse 28 vorgesehenen Anlageflansch ab. Die Druckfederelemente 32 bewirken, dass das Verbindungselement 17 nach hinten gedrückt wird. Dabei wird der Verbindungsweg nach hinten begrenzt durch einen Absatz 15a, der am Spannkolben 3 vorgesehenen Streben 15, welche die entsprechenden axialen Durchgangsöffnungen 16 in dem hinteren Grundkörperelement 1b durchgreifen. Diese sind in Figur 31 erkennbar.

Der an der Rückseite des Verbindungselements 17 vorgesehene Bereich der Ausnehmung 18 ist als ein Druckraum 34 ausgebildet, welcher über eine Druckleitung 34a von außen mit einem Druck beaufschlagbar ist.

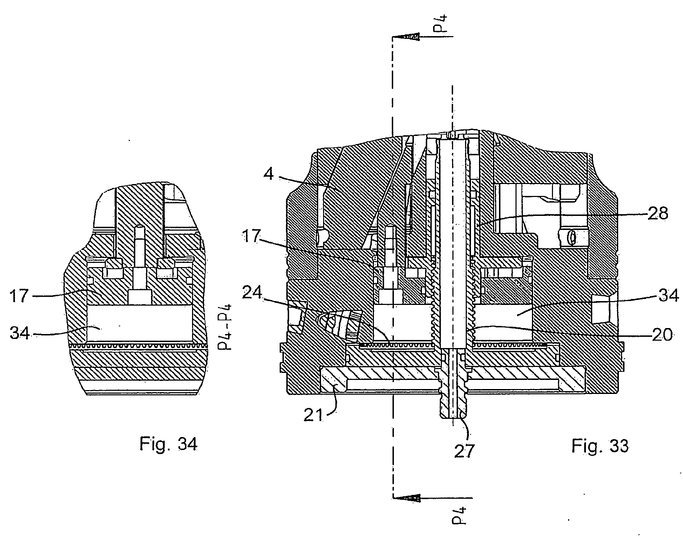

In der Figur 33 ist die Spanneinrichtung in einer Ausgangsstellung dargestellt, in welcher die Zwischenachse 28 in ihre vorderste Stellung gefahren und der Druckraum 34 drucklos ist. Entsprechend wird das Verbindungselement 17 durch die Kraft der Druckfederelemente 32 nach unten gedrückt. Dabei wird der Verstellweg beschränkt, da die Absätze 15a der Streben 15 an dem Anlageflansch in der Zwischenachse 28 in Anlage kommen. Wenn der Druckraum 34 nun mit Druckluft beaufschlagt wird, wird das Verbindungselement 17 und damit der Spannkolben 3 entgegen der Rückstellkraft der Druckfederelemente 32 aus der in Figur 33 dargestellten Stellung in die in Figur 31 dargestellte Stellung angehoben, wodurch die Spannbacken 4 leicht geöffnet werden, um ein Bauteil einsetzen zu können. Wird anschließend der Druckraum 34 wieder entlastet, wird das Verbindungselement 17 durch die Rückstellkraft der Druckfederelemente 32 nach unten gedrückt, so dass die Spannbacken 4 geschlossen werden, um ein zwischen ihnen positioniertes Bauteil zu spannen.

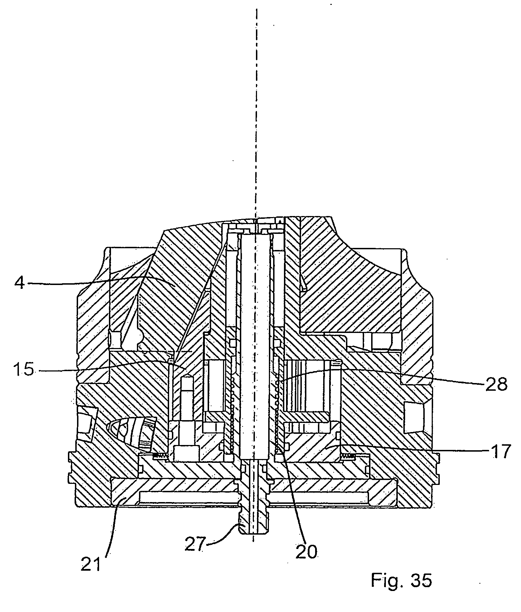

Wenn kleinere Bauteile gespannt werden sollen, wird die Position der Zwischenachse 28 verstellt, indem der Gewindebolzen 20 über das Betätigungselement 25 verdreht wird. In der Figur 35 ist das Verbindungselement 17 in der untersten Position gezeigt.

## Patentansprüche

1. Spann- oder Greifeinrichtung mit einem Grundkörper (1) aus einem formsteifen Material, der eine Längsachse (X) definiert, mehreren Spannbacken (4), die an dem Grundkörper (1) radial in Bezug auf die Längsachse (X) bewegbar gehalten sind, und einem zumindest teilweise hohl ausgebildeten Spannkolben (3), welcher an dem Grundkörper (1) axial zwischen einer hinteren und einer vorderen Endstellung bewegbar gehalten ist und die Spannbacken (4) zumindest teilweise umgreift, wobei die Spannbacken (4) und der Spannkolben (3) miteinander in der Weise gekoppelt sind, dass eine Axialbewegung des Spannkolbens (3) in eine Radialbewegung der Spannbacken (4) umgesetzt wird, wobei die Spannbacken (4) jeweils an einer Seitenfläche eine Führungsnut (10) aufweisen, in welche eine zugeordnete Führungsnase (11) des Spannkolbens (3) eingreift, und jede Führungsnase (11) mit Führungsflächen (10a, 10b) der zugeordneten Führungsnut (10) zusammenwirkt, um Axialbewegungen des Spannkolbens (3) in Radialbewegungen der Spannbacken (4) umzusetzen, **dadurch gekennzeichnet, dass** in der vorderen Stirnfläche des Grundkörpers (1) eine zentrale Aufnahme (2) ausgebildet ist, in welcher die Spannbacken (4) und der Spannkolben (3) angeordnet sind,
dass der Spannkolben (3) die Spannbacken (4) umgreift, wobei die Spannbacken (4) an ihrer Außenseite eine geneigte Außenfläche (4c) und an ihrer radialen Innenseite eine geneigte Innenfläche (4b) aufweisen, denen Wandungen des Spannkolbens (3) zugeordnet sind, die entsprechend geneigt sind und axiale Durchgangsöffnungen (5) des Spannkolbens (3) definieren, welche von den Spannbacken (4) durchgriffen werden, so dass diese nach vorne aus dem Spannkolben (3) ragen, wobei die Spannbacken (4) in den axialen Durchgangsöffnungen (5) des Spannkolbens (3) seitlich geführt sind, dass jede Führungsnut eine radial innere Führungsfläche (10a) und eine radial äußere Führungsfläche (10b) aufweist und die zugeordnete Führungsnase (11) mit beiden Führungsflächen (10a, 10b) in Kontakt steht, so dass eine nach vorne gerichtete Axialbewegung des Spannkolbens (3) durch ein Zusammenwirken der Außenfläche (11b) der Führungsnase (11) mit der radial äußeren Führungsfläche (10b) der Führungsnut (10) in eine radial nach außen gerichtete Bewegung der Spannbacken (4) umgesetzt wird und eine nach hinten gerichtete Axialbewegung des Spannkolbens (3) durch ein Zusammenwirken der Innenfläche (11a) der Führungsnase (11) mit der radial inneren Führungsfläche (10a) in eine radial nach innen gerichtete Spannbewegung der Spannbacke (4) umgesetzt wird, und
dass die Führungsnasen (11) am vorderen Endbereich des Spannkolbens (3) ausgebildet sind.

2. Spann- oder Greifeinrichtung nach Anspruch 1, **dadurch gekennzeichnet, dass** Führungsnuten (10) jeweils nur an einer Seitenfläche der Spannbacken (4), und zwar insbesondere an derjenigen Seitenfläche, welche in der Draufsicht in Richtung des entgegengesetzten Uhrzeigersinns weist, ausgebildet sind.

3. Spann- oder Greifeinrichtung nach einem der vorherigen Ansprüche, **dadurch gekennzeichnet, dass** die Spannbacken (4) mit ihrer hinteren Stirnfläche flächig an einer senkrecht zur Längsachse (X) liegenden Kontaktfläche des Grundkörpers (1) anliegen,
wobei insbesondere am hinteren Ende der Spannbacken (3) jeweils eine radiale Nut (12) in einer Seitenfläche der Spannbacken (3) ausgebildet ist, in welche ein Haltesteg (13) eingreift, um die Spannbacke (3) axial an der Kontaktfläche zu sichern, und bevorzugt die radialen Nuten (12) jeweils an derselben Seitenfläche der Spannbacken (4) wie die Führungsnuten (10) ausgebildet sind, und
wobei insbesondere die Haltestege (13) an Halteelementen (14) ausgebildet sind, welche an dem Grundkörper (1) festgeschraubt sind.

4. Spann- oder Greifeinrichtung nach einem der vorherigen Ansprüche, **dadurch gekennzeichnet, dass** vom dem Grundkörper (1) ein koaxial zur Längsachse (X) positionierter Führungszapfen (7) abragt, an dessen Außenseite der Spannkolben (3) axial bewegbar geführt ist,
wobei insbesondere der Grundkörper (1) axial unterteilt ist und ein die Aufnahme (2) definierendes Grundkörperelement (1a) und ein den Führungszapfen (7) tragendes Grundkörperelement (1b) aufweist, wobei die beiden Grundkörperelemente (1a, 1 b) durch korrespondierende Zentriermittel (6) zueinander ausgerichtet und miteinander lösbar verbunden, insbesondere verschraubt sind.

5. Spann- oder Greifeinrichtung nach Anspruch 4, **dadurch gekennzeichnet, dass** der Führungszapfen (7) hülsenartig ausgebildet ist und an seinem vorderen Endbereich aus dem Grundkörper (1) ragt, wobei in der Wandung des Führungszapfens (7) Längsschlitze (9) vorgesehen sind, welche von den Spannbacken (3) durchgriffen werden, wobei insbesondere die Längsschlitze (9) zur vorderen Stirnseite des Führungszapfens (7) offen sind.

6. Spann- oder Greifeinrichtung nach einem der vorherigen Ansprüche, **dadurch gekennzeichnet, dass** der Spannkolben (3) an seinem rückseitigen Ende mehrere sich axial erstreckende Streben (15) trägt, welche entsprechende axiale Durchgangsöffnungen (5) in dem Grundkörper (1) durchgreifen.

7. Spann- oder Greifeinrichtung nach Anspruch 6, **dadurch gekennzeichnet, dass** die Streben (15) an ihren freien Enden durch ein Verbindungselement (17), das bevorzugt als ein Verbindungsring ausgebildet ist, welcher an den Streben (15) festgeschraubt ist, miteinander verbunden sind, wobei bevorzugt der Grundkörper (1) und insbesondere das den Führungszapfen (7) tragende Grundkörperelement (1b) an seiner Rückseite eine zentrale Ausnehmung (18) aufweist, in welche die Streben (15) münden, wobei die Ausnehmung (18) insbesondere eine derartige Tiefe besitzt, dass in der hinteren Position des Spannkolbens (3) die freien Enden der Streben bzw. das die freien Enden der Streben (15) verbindende Verbindungselement (17) noch innerhalb der Ausnehmung (18) liegen, wobei das Verbindungselement (17) in der zentralen Ausnehmung (18) axial geführt ist.

8. Spann- oder Greifeinrichtung nach Anspruch 7, **dadurch gekennzeichnet, dass** ein Stellantrieb zur Betätigung des Spannkolbens (3) mit dem Verbindungselement (17) verbunden ist.

9. Spann- oder Greifeinrichtung nach Anspruch 8, **dadurch gekennzeichnet, dass** das Verbindungselement (17) ringförmig ausgebildet ist und ein Innengewinde aufweist, in welches ein Gewindebolzen (20) eingeschraubt ist, der in dem Grundkörper (1) drehbar, aber axialfest gehalten ist, und dass Antriebsmittel vorgesehen sind, um den Gewindebolzen (20) zu drehen,
wobei insbesondere an dem Gewindebolzen (20) ein Zahnkranz (23) drehfest gehalten ist, der von außen insbesondere durch eine Betätigungsöffnung in dem Grundkörper (1), mittels eines Betätigungselements (25) in Drehung versetzbar ist, wobei bevorzugt der Zahnkranz (23) eine Stirnverzahnung (24) aufweist.

10. Spann- oder Greifeinrichtung nach Anspruch 9, **dadurch gekennzeichnet, dass** das Verbindungselement (17) ringförmig ausgebildet ist, dass in dem Grundkörper (1), insbesondere in einem den Führungszapfen (7) tragenden Grundkörperelement (1b) eine Achse (27) gehalten ist, dass an der Achse (27) eine Zwischenachse (28) axial verstellbar gehalten ist, welche das Verbindungselement (17) axial durchgreift, dass Federelemente, insbesondere Druckfederelemente (32) vorgesehen sind, die sich zwischen dem Verbindungselement (17) und der Zwischenachse (28) abstützen, um das Verbindungselement (17) nach hinten zu drücken, wobei Anschlagmittel (33) vorgesehen sind, welche einen axialen Verstellweg des Verbindungselements (17) nach hinten hin begrenzen, und dass das hintere Ende des Grundkörpers (1) verschlossen ist, so dass zwischen dem Verbindungselement (17) und dem Gehäusekörper (1) an der Rückseite des Verbindungselements (17) in der zentralen Ausnehmung (18) ein Druckraum (34) ausgebildet wird, welcher über eine Druckleitung (34a) von außen mit einem Druck beaufschlagbar ist, um das Verbindungselement (17) entgegen der Rückstellkraft der Druckfederelemente (32) nach vorne zu bewegen.

11. Spann- oder Greifeinrichtung nach Anspruch 10, **dadurch gekennzeichnet, dass** die Zwischenachse (28) an ihrem vorderen Endbereich ein Außengewinde (29) aufweist, das in eine korrespondierende Gewindebohrung (30) des Führungszapfens (7) eingeschraubt ist, so dass die Zwischenachse (28) durch Verdrehen um ihre Längsachse axial verstellt werden kann,
wobei insbesondere die Zwischenachse (28) ein an der Achse (27) axial verschiebbar, aber drehfest gehaltenes Hülsenelement (28a) und einen an dem freien Ende des Hülsenelementes (28) fixierten Gewindekopf (28b), welcher ein mit der Gewindebohrung (30) des Führungszapfens (7) in Eingriff stehendes Außengewinde aufweist, umfasst, und/oder an einem hinteren Endbereich der Zwischenachse (28) die Anschlagmittel (33) insbesondere in Form eines radial vorstehenden Absatzes ausgebildet sind, und/oder eine Zwischenhülse (31) auf die Zwischenachse (28) aufgeschoben ist und an ihrem vorderen Endbereich an einem Axialanschlag der Zwischenachse (28) anliegt, wobei sich die Druckfederelemente (32) zwischen dem Verbindungselement (17) und der Zwischenhülse (31) abstützen.

12. Spann- oder Greifeinrichtung nach Anspruch 10 oder 11, **dadurch gekennzeichnet, dass** in der vorderen Stirnfläche der Zwischenachse (28), insbesondere eines Gewindekopfes (28b) der Zwischenachse (28), Eingriffsmittel für ein Drehwerkzeug ausgebildet sind, über welche die Zwischenachse (28) gedreht und so axial gegenüber dem Grundkörper (1) verstellt werden kann.

13. Spann- oder Greifeinrichtung nach Anspruch 10, **dadurch gekennzeichnet, dass** ein Gewindebolzen (20) an der Achse (27) axialfest, aber um seine Längsachsen drehbar gehalten ist und die Zwischenachse (28) auf den Gewindebolzen (20) aufgeschraubt ist, so dass die Zwischenachse (28) durch Verdrehen des Gewindebolzens (20) axial verstellbar ist, und dass Antriebsmittel vorgesehen sind, um den Gewindebolzen (20) zu drehen, wobei insbesondere an dem Gewindebolzen (20) ein Zahnkranz (23) drehfest gehalten ist, der von außen insbesondere durch eine Betätigungsöffnung in dem Grundkörper (1) mittels eines Betätigungselements (25) in Drehung versetzbar ist und bevorzugt der Zahnkranz (23) eine Stirnverzahnung (24) aufweist, und wobei insbesondere ein Ringspalt zwischen dem Verbindungselement (17) und der Zwischenachse (18) abgedichtet ist.

## Claims

1. Chucking or gripping device with a base body (1) made of rigid material, that defines a longitudinal axis (X), several clamping jaws (4) which are movably held on the base body (1) radially with regard to the longitudinal axis (X), and a tensioning piston (3), which is at least partially hollow and is movably held on the base body (1) axially between a rear and a front end position and encompasses the clamping jaws (4) at least partially, wherein the clamping jaws (4) and the tensioning piston (3) are coupled with one another in such a way, that an axial movement of the tensioning piston (3) is converted into a radial movement of the clamping jaws (4), wherein the clamping jaws (4) each have on one side face a guide groove (10), into which engages a corresponding guide nose (11) of the tensioning piston (3), wherein each guide nose (11) coacts with guide faces (10a, 10b) of the corresponding guide groove (10) in order to convert axial movements of the tensioning piston (3) into a radial movements of the clamping jaws (4), **characterized in that** a central reception (2) is formed in the front face of the base body (1), in which the clamping jaws (4) and the tensioning piston (3) are positioned, that the tensioning piston (3) encompasses the clamping jaws (4), wherein the clamping jaws (4) have on their outer side a slanted exterior face (4c) and on their radially inner side a slanted inner surface (4b), which have associated thereto wall sections of the tensioning piston (3), which are correspondingly slanted and define axial through openings (5) of the tensioning piston (3), through which the clamping jaws (4) pass, so that they protrude out of the tensioning piston (3) to the front side, wherein the clamping jaws (4) are guided in the axial through openings (5) of the tensioning piston (3) on their sides,
that each guide groove comprises a radially inner guide face (10a) and a radially outer guide face (10b) and the guide nose (11) associated thereto is in contact with both guide faces (10a, 10b), so that an axial movement of the tensioning piston (3) to the front is converted into outwardly directed movements of the clamping jaws (4) by coaction of the outer face (11 b) of the guide nose (11) with the radially outer guide face (10b) of the guide groove (10) and an axial movement of the tensioning piston (3) to the rear is converted in radially inwardly directed clamping movements of the clamping jaws (4) by coaction of the inner face (11 a) of the guide nose (11) with the radially inner guide face (10a), and
that the guide noses (11) are provided on the front end section of the tensioning piston (3).

2. Chucking or gripping device according to claim 1, **characterized in that** guide grooves (10) are provided only on one side face of the clamping jaws (4), namely in particular on the side face, which in the plan view is directed against the clockwise direction.

3. Chucking or gripping device according to any of the preceding claims, **characterized in that** the clamping jaws (4) rest with their rear face on a contact face of the base body (1) which is directed vertically to the longitudinal axis (X) in a planar fashion,
wherein in particular on the rear end of each clamping jaws (3) a radial groove (12) is formed in a side face of the clamping jaws (3), into which a holding rib (13) engages, in order to secure the clamping jaws (3) axially on the contact face, wherein in particular the radial groves (12) are each formed on the same side face of the clamping jaws (4) as the guide grooves (10) and wherein in particular the holding ribs (13) are formed on holding elements (14), which are secured to the base body (1) and in particular to the base body element (1 b) carrying the guide pin (7).

4. Chucking or gripping device according to any of the preceding claims, **characterized in that** a guide pin (7) positioned coaxially to the longitudinal axis (X) extends from the base body (1), on the external side of which the tensioning piston (3) is axially movable guided, wherein in particular the base body (1) is axially divided and comprises a base body element (1a) defining the reception (2) and a base body element (1 b) carrying the guiding pin (7), wherein the two base body elements (1 a, 1 b) are aligned with regard to another by corresponding centering means and releasable connected with each other, in particular screwed together.

5. Chucking or gripping device according to claim 4, **characterized in that** the guide pin (7) is formed as a sleeve and protrudes with its front end section out of the base body (1), wherein longitudinal slots (9) are provided in the wall of the guide pin (7), through which the tensioning piston (3) passes, wherein in particular the longitudinal slots (9) are open to the front face of the guide pin (7).

6. Chucking or gripping device according to any of the preceding claims, **characterized in that** the tensioning piston (3) carries on its rear end several axially extending struts (15), that pass through corresponding axial through openings (5) in the base body (1).

7. Chucking or gripping device according to claim 6, **characterized in that** the struts (15) are connected with each other on their free ends by a connecting element (17), the connecting element being in particular formed as a connecting ring screwed fixedly to the struts (15),
wherein preferably the base body (1) and in particular the base body element (1b) carrying the guide pin (7) has on its rear side a recess (18) into which the struts (15) lead, wherein the recess (18) in particular has such a depth, that in the rear position of the tensioning piston (3) the free ends of the struts respectively the connecting element (17) connecting the free ends of the struts (15) are still positioned within the recess (18), and wherein the connecting element (17) is in particular axially guided in the central recess (18).

8. Chucking or gripping device according to claim 7, **characterized in that** an actuator for operating the tensioning piston (3) is connected with the connecting element (17).

9. Chucking or gripping device according to claim 8, **characterized in that** the connecting element (17) is ring-shaped and has a female thread, into which a threaded bolt (20) is screwed, which is held on the base body (1) in a turnable, but axially fixed manner, and that driving means are provided for turning the threaded bolt (20),
wherein preferably a gear ring (23) is held on the threaded bolt (20) in a torque proof manner, which in particular has a spur gearing (24), that can be turned by means of an actuating element (25) from outside in particular through an actuating opening in the base body (1).

10. Chucking or gripping device according to claim 9, **characterized in that** the connecting element (17) is ring-shaped, that a shaft (27) is held in the base body (1), in particular a base body element (1 b) carrying the guide pin (7), that an intermediate-shaft (28) is axially displaceably held on the shaft (27), which axially passes through the connecting element (17), that spring elements, in particular pressure spring elements (32) are provided, which are retained between the connecting element (17) and the intermediate shaft (28) in order to urge the connecting element (17) to the rear side, wherein stopper means (33) are provided limiting the axial displacement path of the connecting element (17) to the rear side, and that the rear end of the base body (1) is closed, so that a pressure chamber (34) is formed between the connecting element (17) and the base body (1) on the rear side of the connecting element (17) in the central recess (18), which can be pressurized from outside via a pressure line in order to move the connecting element (17) to the front side against the restoring force of the pressure spring elements (32).

11. Chucking or gripping device according to claim 10, **characterized in that** the intermediate shaft (28) has at its front end section a male thread (29), which is screwed into a corresponding threaded bore (30) of the guide pin (7), so that the intermediate shaft (28) can be displaced axially by turning around its longitudinal axis, wherein in particular the intermediate shaft (28) comprises a sleeve element (28a) held on the shaft (27) in an axially displaceable but torque proof manner and a threaded head (28b) fixed to the free end of the sleeve element (28) which has a male thread in engagement with the threaded bore (30) of the guide pin (7) and wherein preferably the stopper means (33) are formed on the rear end section of the intermediate shaft (28) in particular in the form of a radially protruding shoulder and/or an intermediate sleeve (31) is slided onto the intermediate shaft (28) and rests at its front end section on an axial stopper of the intermediate shaft (28), wherein the compression spring elements (32) are retained between the connecting element (17) and the intermediate sleeve (31).

12. Chucking or gripping device according to claim 10 or 11, **characterized in that** in the front face of the intermediate shaft (28), in particular of a threaded head (28b) of the intermediate shaft (28), engagement means for a turning tool are formed, via which the intermediate shaft (28) can be turned and thus axially displaced with regard to the base body (1).

13. Chucking or gripping device according to claim 10, **characterized in that** a threaded bolt (20) is held on the shaft (27) in an axially fixed position but can be turned around its longitudinal axis and the intermediate shaft (28) is screwed onto the threaded bolt (20), so that the intermediate shaft (28) can be axially displaced by turning the threaded bolt (20), and that drive means are provided for turning the threaded bolt (20),
wherein in particular a gear ring (23) is on the threaded bolt (20) in a torque proof manner held, that can be turned by means of an actuating element (25) from outside in particular through an actuating opening in the base body (1) and preferably the gear ring (23) has a spur gearing (24), and wherein in particular an annular gap between the connecting element (17) and the intermediate shaft (28) is sealed off.

## Revendications

1. Dispositif de serrage ou de préhension avec un châssis (1) en matériau rigide définissant un axe longitudinal (X), plusieurs mâchoires de serrage (4) montées sur le châssis (1) qui relativement à l'axe longitudinal (X) sont maintenues radialement déplaçables et un piston de serrage (3) au moins partiellement structuré en creux, maintenu sur le châssis (1) axialement déplaçable entre des positions de fin en arrière et en avant et enveloppant les mâchoires de serrage (4) au moins partiellement, les mâchoires de serrage (4) et le piston de serrage (3) étant couplés de telle manière qu'un mouvement axial du piston de serrage (3) est mis en oeuvre en un mouvement radial des mâchoires de serrage (4), cependant que les mâchoires de serrage (4) comportent sur une face latérale, chaque fois une rainure de guidage (10), dans laquelle s'engage une saillie correspondante de guidage (11) du piston de serrage (3), cependant que chaque saillie de guidage (11) agit concomitamment avec les surfaces de guidage (10a,10b) de la rainure correspondante de guidage (10), avec le but de transposer des mouvements axiaux du piston de serrage (3) en mouvements radiaux des mâchoires de serrage (4),
**caractérisé en ce que** sur l'avant de la face frontale du châssis (1), un réceptacle central (2) est formé, dans lequel les mâchoires de serrage (4) et le piston de serrage (3) sont disposés, et
**en ce que** le piston de serrage (3) enveloppe les mâchoires de serrage (4), tandis que les mâchoires de serrage (4) présentent sur leur côté externe, une surface extérieure inclinée (4c) et sur leur côté radiale interne, une face interne inclinée (4b), à lesquelles sont associées des parois du piston de serrage (3) qui sont inclinées de manière appropriée et définissent des ouvertures axiales traversantes (5) du piston de serrage (3), qui sont traversées par les mâchoires de serrage (4), de telle manière qu'elles projettent vers l'avant à partir du piston de serrage (3), les mâchoires de serrage (4) étant guidées latéralement dans les ouvertures traversantes axiales (5) du piston de serrage (3), chaque rainure de guidage comporte une surface interne radiale de guidage (10a) et une surface externe radiale de guidage (10b) et **en ce que** la saillie correspondante de guidage (11) se trouve en contact avec les deux surfaces de guidage (10a, 10b), de telle manière qu'un mouvement axial dirigé vers l'avant du piston de serrage (3) est mis en oeuvre grâce à l'effet concomitant de la surface extérieure (11 b) de la saillie de guidage (11) avec la surface externe radiale de guidage (10b) de la rainure de guidage (10) dans un mouvement radial dirigé vers l'extérieur des mâchoires de serrage (4) et un mouvement axial dirigé vers l'arrière du piston de serrage (3), grâce à un effet concomitant de la face interne (11a) de la saillie de guidage (11) avec la surface interne radiale de guidage (10a) est transformé en un mouvement de serrage dirigé radialement vers l'intérieur de la mâchoire de serrage (4), et que les saillies de guidage (11) sont façonnées sur la partie d'extrémité à l'avant du piston de serrage (3).

2. Dispositif de serrage ou de préhension selon la revendication 1, cependant que les rainures de guidage (10) sont formées chaque fois de préférence uniquement sur une face latérale des mâchoires de serrage (4), et en fait surtout sur cette même face latérale qui dans la vue de dessus est indiquée dans le sens contraire des aiguilles d'une montre.

3. Dispositif de serrage ou de préhension selon l'une des revendications précédentes, **caractérisé en ce que** les mâchoires de serrage (4), avec leur face frontale arrière sont appliquées à plat sur une surface de contact du corps de base (1) se trouvant être perpendiculaire à l'axe longitudinal (X), en particulier d'un élément du corps de base (1b) comportant le tenon de guidage (7), cependant que en particulier à l'extrémité arrière des mâchoires de serrage (3) est façonnée chaque fois une rainure radiale (12) dans une face latérale des mâchoires de serrage (3), dans laquelle s'engage un tenon de fixation (13), afin de sécuriser la mâchoire de serrage (3) axialement sur la surface de contact, cependant qu'en particulier les rainures radiales (12) sont façonnées chaque fois sur la même face latérale des mâchoires de serrage (4) que les rainures de guidage (10), et cependant que en particulier les tenons de fixation (13) sont façonnés sur des éléments de retenue (14), vissés sur le châssis (1) et en particulier sur l'élément arrière du corps de base (1 b) portant le tenon de guidage (7).

4. Dispositif de serrage ou de préhension l'une des revendications précédentes, **caractérisé en ce que** un tenon de guidage (7), positionné de façon coaxiale relativement à l'axe longitudinal (X) dépassant du châssis (1) est prévu, sur la face externe duquel, le piston de serrage (3) est guidé de manière axialement déplaçable, cependant que le châssis (1) est en particulier axialement subdivisé et comporte un élément du châssis (1 a) définissant le réceptacle et un élément de corps de base (1b) portant le tenon de guidage (7), cependant que les deux éléments de corps de base (1 a, 1 b) sont orientés en relation l'un avec l'autre par des moyens correspondants de centrage (6) et sont couplés l'un à l'autre de manière amovible, en particulier vissés.

5. Dispositif de serrage ou de préhension selon la revendication 4, **caractérisé en ce que** le tenon de guidage (7) est façonné comme un manchon et que sur sa partie d'extrémité à l'avant, il se dresse en-dehors du corps de base (1), cependant que dans la cloison du tenon de guidage (7), des fentes longitudinales (9) sont prévues, qui sont traversées par des mâchoires de serrage (3), cependant que les fentes longitudinales (9) sont notamment ouvertes vers la face frontale avant du tenon de guidage (7).

6. Dispositif de serrage ou de préhension selon l'une des revendications précédentes, **caractérisé en ce que** le piston de serrage (3), à son extrémité arrière, porte plusieurs entretoises (15) s'étendant axialement et traversant des ouvertures de passage axiales correspondantes (5), dans le châssis (1).

7. Dispositif de serrage ou de préhension selon la revendication 6, **caractérisé en ce qu'**en leurs extrémités libres, les entretoises (15) sont reliées entre eux par un élément de raccord (17), l'élément de raccord étant en particulier structuré sous forme de bague de liaison vissée aux entretoises (15),
de préférence, le châssis (1) dans sa face arrière, présente un évidement central (18) sur lequel aboutissent les entretoises (15), cependant que l'évidement (18) comporte en particulier une telle profondeur que dans la position arrière du piston de serrage (3), les extrémités libres des entretoises (15) ou l'élément de raccord raccordant (17), reposent encore à l'intérieur de l'évidement (18) et cependant que, en particulier dans l'évidement central (18), l'élément de raccord (17) est guidé axialement.

8. Dispositif de serrage ou de préhension selon la revendication 7, **caractérisé en ce qu'**un actuateur pour l'actionnement du piston de serrage (3) est relié à l'élément de raccord (17).

9. Dispositif de serrage ou de préhension selon la revendication 8, **caractérisé en ce que** l'élément de raccord (17), est façonné en forme de bague et comporte un filetage intérieur dans lequel est vissé un boulon fileté (20) pivotant dans le châssis (1), mais maintenu axialement fixe, et
que des moyens moteurs sont prévus dans le but de faire tourner le boulon fileté (20), cependant que, de préférence sur le boulon fileté (20), est maintenue de manière fixe, une couronne dentée (23), comportant notamment une denture droite (24), déplaçable en rotation depuis l'extérieur, au moyen d'un élément d'actionnement (25), par exemple grâce à un ouverture d'actionnement dans le châssis (1).

10. Dispositif de serrage ou de préhension selon la revendication 9, **caractérisé en ce que** l'élément de raccord (17) est façonné en forme de bague, **en ce que** dans le châssis (1), notamment dans un élément du corps de base (1 b) portant le tenant de guidage (7), un axe (27) est maintenu, que sur l'axe (27), est maintenu un axe intermédiaire (28) axialement déplaçable, s'engageant axialement à travers l'élément de raccord (17), **en ce que** des éléments de ressort, en particulier des éléments de ressort pression (32) sont prévus qui se maintiennent en appui entre l'élément de raccord (17) et l'axe intermédiaire (28), dans le but de presser l'élément de raccord (17) vers l'arrière, cependant que sont prévus des moyens d'arrimage (33) qui limitent vers l'arrière une course axiale de l'élément de raccord (17), et **en ce que** l'extrémité arrière du châssis (1) est fermée, de telle manière qu'entre l'élément de raccord (17) et le corps du boîtier (1), situé à l'arrière de l'élément de raccord (17) dans l'évidement central (18), se développe une chambre de pression (34) qui par l'intermédiaire d'une conduite de pression (34a), peut être sollicitée de l'extérieur par une pression, afin de déplacer l'élément de raccord (17) vers l'avant en sens contraire de la force de rappel des éléments de ressort pression (32).

11. Dispositif de serrage ou de préhension selon la revendication 10, **caractérisé en ce que** l'axe intermédiaire (28) comporte en sa partie d'extrémité située à l'avant, un filet extérieur (29) vissé dans un alésage correspondant taraudé (30) du tenon du guidage (7), de manière à ce que l'axe intermédiaire (28) puisse être déplacé axialement en le tournant autour de son axe longitudinal,
cependant qu'en particulier l'axe intermédiaire (28), comporte un manchon (28a) coulissant axialement sur l'axe (27), cependant maintenu de manière non-tournant et une tête filetée (28b), fixée sur l'extrémité libre du manchon (28), qui présente un filet extérieur en prise avec l'alésage taraudé (30) du tenon de guidage (7), et/ou
sur une partie de l'extrémité située à l'arrière de l'axe intermédiaire (28), les moyens d'arrimage (33) en particulier façonnés sous la forme d'un retrait radial débordant, sont prévus, et/ou un manchon intermédiaire (31), est glissé sur l'axe intermédiaire (28) et est appliqué dans sa partie de l'extrémité située à l'avant, sur une butée axiale de l'axe intermédiaire(28), ce pendant que les éléments de ressorts de pression (32) se maintiennent en appui entre l'élément de raccord (17) et le manchon intermédiaire (31).

12. Dispositif de serrage selon les revendications 10 ou 11, **caractérisé en ce que** sur la face frontale à l'avant de l'entre-axe (28), notamment à l'avant d'une tête filetée (28b) de l'axe intermédiaire(28), sont formés pour un outil de tournage, des moyens d'engagement, par l'intermédiaire desquels l'axe intermédiaire (28) peut être tourné et ainsi axialement déplacé relativement au corps de base (1).

13. Dispositif de serrage ou de préhension selon la revendication 10, **caractérisé en ce qu'**un boulon fileté (20) est maintenu sur l'axe (27) axialement fixe, pivotant cependant autour de ses axes longitudinaux et que l'axe intermédiaire (28) est vissé sur le boulon fileté (20) de manière telle, qu'en tournant le boulon fileté (20), l'axe intermédiaire (28) est axialement orientable, et **en ce que** des moyens moteurs sont prévus pour faire tourner le boulon fileté (20),
cependant qu'en particulier sur le boulon fileté (20), est maintenue de manière fixe une couronne dentée (23), qui de l'extérieur, en particulier grâce à une ouverture d'actionnement dans le corps de base (1) est déplaçable en rotation au moyen d'un élément de commande (25), et cependant que la couronne dentée (23) comporte de préférence une denture droite (24), et cependant que une fente annulaire entre l'élément de raccord (17) et l'entre-axe (18) est étanchéifiée.
